(19) Europäisches Patentamt
European Patent Office
Office européen des brevets

(11) **EP 4 535 648 A1**

(12) **EUROPÄISCHE PATENTANMELDUNG**

(43) Veröffentlichungstag:
**09.04.2025 Patentblatt 2025/15**

(21) Anmeldenummer: **23202006.5**

(22) Anmeldetag: **06.10.2023**

(51) Internationale Patentklassifikation (IPC):
***H02P 21/36*** (2016.01) ***B25F 5/00*** (2006.01)

(52) Gemeinsame Patentklassifikation (CPC):
**H02P 21/36; B23D 59/001; B25F 5/00; B27B 5/38; B28D 7/005;** B28D 1/045

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder:
• **Scherbaum, Markus**
**86853 Gennach (DE)**
• **Specht, Helmut**
**87660 Irsee (DE)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN ZUM BREMSEN EINER WERKZEUGMASCHINE UND WERKZEUGMASCHINE**

(57) Die vorliegende Erfindung betrifft ein Verfahren zum Bremsen einer Werkzeugmaschine, wobei die Werkzeugmaschine eine akkubetriebene Werkzeugmaschine ist und elektrische Energie, die beim Bremsen der Werkzeugmaschine frei wird, in eine Energieversorgungsvorrichtung der Werkzeugmaschine zurückgespeist wird. Die Erfindung macht von dem Grundgedanken Gebrauch, dass die Bremsleistung reduziert wird, wenn die Energieversorgungsvorrichtung ihre Grenzen für die Aufnahme elektrischer Energie erreicht hat. Diese Reduzierung der Bremsleistung kann durch eine Verkürzung eines Stromraumzeigers mit Hilfe von Korrekturfaktoren oder durch seine Drehung in einer Raumzeigerdarstellung bewirkt werden. In einem zweiten Aspekt betrifft die Erfindung eine Werkzeugmaschine zur Durchführung des Bremsverfahrens.

**Fig. 7**

EP 4 535 648 A1

## Beschreibung

Die vorliegende Erfindung betrifft ein Verfahren zum Bremsen einer Werkzeugmaschine, wobei die Werkzeugmaschine eine akkubetriebene Werkzeugmaschine ist und elektrische Energie, die beim Bremsen der Werkzeugmaschine frei wird, in eine Energieversorgungsvorrichtung der Werkzeugmaschine zurückgespeist wird. Die Erfindung macht von dem Grundgedanken Gebrauch, dass die Bremsleistung reduziert wird, wenn die Energieversorgungsvorrichtung der Werkzeugmaschine ihre Grenzen für die Aufnahme elektrischer Energie erreicht hat. Diese Reduzierung der Bremsleistung kann durch eine Verkürzung eines Stromraumzeigers mit Hilfe von Korrekturfaktoren oder durch seine Drehung in einer Raumzeigerdarstellung bewirkt werden. In einem zweiten Aspekt betrifft die Erfindung eine Werkzeugmaschine zur Durchführung des Bremsverfahrens.

## Hintergrund der Erfindung:

Im Bereich der Werkzeugmaschinen ist es bekannt, die Werkzeuge der Werkzeugmaschinen abzubremsen, um eine Arbeit zu beenden oder aus Sicherheitsgründen. Im Stand der Technik sind insbesondere die folgenden Bremsverfahren bekannt: Kurzschlussbremsen, Verwendung eines Bremschoppers als Bremswiderstand und Rekuperation.

Beim Kurzschlussbremsen wird der Motor der Werkzeugmaschine kurzgeschlossen. Dies kann beispielsweise dadurch erreicht werden, dass alle Lowside-Halbleiter des Motorinverters gleichzeitig eingeschaltet werden. Es kann sich ein anfänglich höherer Anfangskurzschluss-Strom ausbilden, der anschließend in einen Dauerkurzschluss-Strom übergeht. Der Kurschluss-Strom erzeugt im Motor der Werkzeugmaschine ein Bremsmoment, mit dem die Werkzeugmaschine bzw. ihr Werkzeug abgebremst werden kann. Nachteilig am Kurzschlussbremsen ist es, dass der Nutzer kaum Einfluss auf das Bremsmoment bzw. die Bremszeit hat. Die Höhe des Kurzschluss-Stroms wird lediglich durch Motorparameter bestimmt. Darüber hinaus muss die Elektronik der Werkzeugmaschine den zu Beginn des Kurzschlussbremsens vergleichsweise hohen Anfangs-Kurzschluss-Strom führen können. Wenn die Werkzeugmaschine nicht dafür ausgelegt ist, solche Kurzschluss-Ströme auszuhalten, kann es zu Beschädigungen an der Werkzeugmaschine bzw. ihrer Elektronik kommen.

Bei der Verwendung eines Bremschoppers als Bremswiderstand kann der Motor der Werkzeugmaschine geregelt gebremst werden, so dass er zum Generator wird. Die abgegebene Energie kann in einen Zwischenkreis der Elektronik der Werkzeugmaschine zurückgespeist werden. Die Werkzeugmaschine kann einen Bremschopper als Bremswiderstand aufweisen, wobei der Bremsshopper dazu eingerichtet ist, einen Widerstand an den Zwischenkreis anzuschließen, um auf diese Weise die Energie im Bremswiderstand in Wärme umzuwandeln. Obwohl die Verwendung eines Bremschoppers mehr Freiheitsgrade bei der Erreichung bestimmter gewünschter Bremsmomente bzw. Bremszeiten gewährt, besteht ein Nachteil bei der Verwendung eines Bremschoppers darin, dass zumindest ein zusätzliches Hardware-Bauteil in der Werkzeugmaschine verbaut werden muss. Dies erhöht das Gewicht der Werkzeugmaschine und ihr Volumen. Unter einem größeren Volumen kann beispielsweise die Ergonomie bzw. die Handhabbarkeit der Werkzeugmaschine leiden. Häufig zieht der Einbau eines Bremschoppers auch das Erfordernis weiterer zusätzlicher Elektronik-Bauteile, wie MOSFETs, Gatetreiber oder Anschlusslitzen, mit sich, was insbesondere auch die Herstellung bzw. den Zusammenbau der Werkzeugmaschine erschweren kann. Insbesondere dann, wenn der Bremschopper für hohe Pulsleistungen ausgelegt sein soll, können die Kosten für die Werkzeugmaschine, sowie der Bauraumbedarf im Inneren der Werkzeugmaschine erheblich steigen.

Das Rekuperieren ist nur dann möglich, wenn rückspeisefähige Energieversorgungsvorrichtungen in der Werkzeugmaschine verwendet werden. Der Motor der Werkzeugmaschine kann beim Rekuperieren geregelt gebremst und dadurch zum Generator werden. Die abgegebene Energie kann in den Zwischenkreis zurückgespeist und von dort in die Energieversorgungsvorrichtungen transferiert werden. Die Güte und das Rekuperationsvermögen der Werkzeugmaschine hängen wesentlich von der in der Werkzeugmaschine verbauten Energieversorgungsvorrichtung ab. Bei Bremsvorgängen, bei denen beispielsweise der Bremsstrom konstant sein soll oder eine Bremsrampe vorgegeben wird, können Betriebszustände auftreten, die die Energieversorgungsvorrichtung so belasten, dass Grenzwerte, die beispielsweise elektrische Eigenschaften der Energieversorgungsvorrichtung, wie Spannung oder Stromtragefähigkeit, betreffen, überschritten werden können. Dadurch können Schäden an der Energieversorgungsvorrichtung auftreten. Um das Überschreiten dieser Grenzwerte zu vermeiden, ist bisher im Stand der Technik bekannt, den Bremsvorgang möglichst langsam durchzuführen. Dies ist aber vor allem dann keine gute Idee, wenn ein schnelles Abbremsen der Werkzeugmaschine gewünscht ist, beispielsweise um den Nutzer der Werkzeugmaschine schnell und sicher vor Verletzungen zu bewahren.

Die Aufgabe, die der vorliegenden Erfindung zugrunde liegt, besteht darin, die vorstehend beschriebenen Mängel und Nachteile des Standes der Technik zu überwinden und Verfahren zum Abbremsen einer Werkzeugmaschine, sowie eine Werkzeugmaschine bereitzustellen, so dass einerseits ein möglich wirksamer Schutz eines Nutzers der Werkzeugmaschine ermöglicht werden kann, andererseits eine kompakte, handliche Werkzeugmaschine bereitgestellt werden kann. Darüber hinaus soll die freiwerdende Energie möglichst effektiv in die Energieversorgungsvorrichtung zurückgespeist werden, um eine möglichst ressourcenschonende Werkzeugmaschine bereitstellen zu können, die eine gute Akku-Reichweite aufweist.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

**Beschreibung der Erfindung:**

Erfindungsgemäß ist ein Verfahren zum Bremsen einer Werkzeugmaschine vorgesehen, wobei die Werkzeugmaschine eine akkubetriebene Werkzeugmaschine ist und elektrische Energie, die beim Bremsen der Werkzeugmaschine frei wird, in eine Energieversorgungsvorrichtung der Werkzeugmaschine zurückgespeist wird. Das Bremsverfahren durch folgende Verfahrensschritte gekennzeichnet:

a) Betrieb der Werkzeugmaschine unter Vorgabe eines ersten Stromwerts,

b) Rückspeisung der elektrischen Energie, die beim Bremsen der Werkzeugmaschine frei wird, in die Energieversorgungsvorrichtung der Werkzeugmaschine,

c) Reduzierung einer Bremsleistung der Werkzeugmaschine, wenn mindestens ein Grenzwert der Energieversorgungsvorrichtung überschritten wird,

d) Weiterbetrieb der Werkzeugmaschine mit Sollstromwerten, wobei die Sollstromwerte basierend auf der Reduzierung der Bremsleistung der Werkzeugmaschine und des ersten Stromwerts ermittelt werden.

Mit dem Verfahren kann einerseits eine möglichst kurze Bremszeit ermöglicht werden, andererseits eine kompakte, handliche Werkzeugmaschine bereitgestellt werden. Durch die besonders kurze Bremszeit kann der Nutzer der Werkzeugmaschine besonders wirksam vor Verletzungen geschützt werden. Das vorgeschlagene Verfahren ermöglicht vorteilhafterweise eine Rekuperation, d.h. eine Zurückspeisung von elektrischer Energie in eine Energieversorgungsvorrichtung in einer Werkzeugmaschine, mit besonders großer Effizienz. Das vorgeschlagene Verfahren kann als effizienter generatorischer Bremsbetrieb ohne Bremschopper bezeichnet werden.

Mit dem Verfahren ist es vorteilhafterweise möglich, die freiwerdende Bremsenergie besonders effizient in die Energieversorgungsvorrichtung zurückzuspeisen. Es ist im Sinne der Erfindung bevorzugt, dass die Werkzeugmaschine zur Versorgung mit elektrischer Energie mit mindestens einer Energieversorgungsvorrichtung verbindbar ist. Beispielsweise kann die Werkzeugmaschine Aufnahmebereiche bzw. Möglichkeiten zur Ankoppelung von einer, zwei oder mehr Energieversorgungsvorrichtungen, wie Batterien oder Akkumulatoren («Akkus») aufweisen. Es ist im Sinne der Erfindung bevorzugt, dass die Begriffe Akkumulator («Akku»), Batterie und Energieversorgungsvorrichtung synonym verwendet werden. Die Elektronik der Werkzeugmaschine und ihr Motor werden dabei vorzugsweise in einem optimalen Arbeitspunkt mit besonders geringer Verlustleistung betrieben. Um dies zu erreichen, kann die Werkzeugmaschine beispielsweise entlang einer verlustleistungsoptimierten Kennlinie betrieben werden. Die Formulierung, dass der Betrieb der Werkzeugmaschine entlang einer verlustleistungsoptimierten Kennlinie erfolgt, bedeutet im Sinne der Erfindung bevorzugt, dass die Verluste bei Betrieb der Werkzeugmaschine mit der Erfindung minimiert werden können. Dabei kann es sich beispielsweise um Eisen- und/oder Kupferverluste handeln. Die Formulierung, dass der Betrieb der Werkzeugmaschine entlang einer verlustleistungsoptimierten Kennlinie erfolgt, kann im Sinne der Erfindung darüber hinaus bedeuten, dass die Werkzeugmaschine in Bezug auf die Stromausbeute und/oder den Wirkungsgrad optimiert betrieben wird.

Es ist im Sinne der Erfindung bevorzugt, dass die Werkzeugmaschine entlang einer MTPA-Kennlinie in einer Raumzeigerdarstellung betrieben wird, wobei die Abkürzung MTPA für "maximum torque per Ampere" steht, d.h. für ein maximales Drehmoment pro Ampere. Dadurch kann die Werkzeugmaschine vorteilhafterweise mit einer optimalen Stromausbeute betrieben werden. Es hat sich gezeigt, dass der Betrieb der Werkzeugmaschine auf diese Weise besonders verlustarm bzw. verlustleistungsarm erfolgen kann. Vorzugsweise wird im Kontext der Erfindung ein maximaler Motorstatorsollstrom $I\_S$, max vorgegeben, der im Sinne der Erfindung bevorzugt auch als maximaler Motorstrom $I\_S$, max bezeichnet wird. Dieser maximale Motorstrom $I\_S$, max kann somit einen ersten Stromwert im Sinne der Erfindung darstellen. Bei einer zu hohen Rückspeisung bzw. Rückspeiseleistung kann es allerdings dazu kommen, dass Grenzwerte, die einen sicheren Betrieb der Energieversorgungsvorrichtung sicherstellen sollen, überschritten werden. Diese Grenzwerte können die Spannung und/oder den Strom der Energieversorgungsvorrichtung betreffen. Sie werden im Sinne der Erfindung als Grenzwerte der Energieversorgungsvorrichtung bzw. als «Akku-Grenzwerte» bezeichnet. Es ist im Sinne der Erfindung bevorzugt, dass der Akku-Grenzwerte für die Spannung als $U\_Akku$, max und der Akku-Grenzwert für den Strom als $I\_Akku$, max bezeichnet wird.

Alternativ oder ergänzend kann es sich bei dem ersten Stromwert um den Motorsollstrom $I\_S$, soll handeln. Es ist im Sinne der Erfindung bevorzugt, dass das Überschreiten der Akku-Grenzwerte durch eine aktive Regelung der Akku-Spannung und/oder des Akku-Stroms verhindert wird. Dazu wird, vorzugsweise nachdem eine Überschreitung von mindestens einem der Akku-Grenzwerte erkannt wurde, eine Reduzierung der Bremsleistung der Werkzeugmaschine initiiert. Erfindungsgemäß ist dazu vorgesehen, dass Sollstromwerte berechnet und ausgegeben werden, wobei die Ermittlung der Sollstromwerte basierend auf der Reduzierung der Bremsleistung der Werkzeugmaschine und des ersten Stromwerts erfolgt. Es ist im Sinne der Erfindung bevorzugt, dass die Sollstromwerte aus dem Verfahrensschritt d) des vorgeschlagenen Verfahrens Sollstromwerte für die d- und die q-Achse der Raumzeigerdarstellung sind. Die Sollstromwerte für die d- und die q-Achse können somit geänderte bzw. zweite Stromwerte darstellen, mit denen der Betrieb der Werkzeugmaschine fortgeführt werden kann. Durch den Weiterbetrieb der Werkzeugmaschine mit den geänderten Sollstromwerten, vorzugsweise für die d- und die q-Achse der Raumzeigerdarstellung, kann eine Reduzierung der Bremsleistung der Werkzeugmaschine sichergestellt werden, so dass die Grenzwerte der Energieversorgungsvorrichtung nicht überschritten werden, aber dennoch ein sicheres und schnelles Bremsen der Werkzeugmaschine ermöglicht wird.

In einer besonders bevorzugten Ausgestaltung der Erfindung kann die Werkzeugmaschine beispielsweise mit einem Motorsollstrom I_S, soll betrieben werden. Es kann darüber hinaus ein maximaler Motorstrom I_S, max vorgegeben werden, wobei die Bremsleistung der Werkzeugmaschinereduziert wird, wenn mindestens ein Grenzwert der Energieversorgungsvorrichtung überschritten wird. Die Bremsleistung der Werkzeugmaschine kann insbesondere dadurch reduziert werden, dass ein Stromraumzeiger I_S, max in der Raumzeigerdarstellung durch Anwendung eines geänderten Bremswinkels β_brems so gedreht wird, dass eine Länge des Stromraumzeigers I_S, max im Wesentlichen unverändert bleibt. Durch die Drehung des Stromraumzeigers I_S, max können die geänderten Sollstromwerte, vorzugsweise für die d- und die q-Achse der Raumzeigerdarstellung, ermittelt und die Bremsleistung der Werkzeugmaschine auf diese Weise verringert werden. Es ist in dieser Ausgestaltung der Erfindung bevorzugt, dass mit Hilfe des maximalen Statorstroms I_S, max und dem Bremswinkel β_brems die Sollstromwerte, vorzugsweise für die d- und q-Achse des Raumzeigerdarstellung, ermittelt werden, wobei die Sollstromwerte, vorzugsweise für die d- und q-Achse, als Ausgangs- oder Stellgröße dem weiterem Abbremsverfahren zugrunde gelegt werden sollen.

In einem Ausführungsbeispiel betrifft die Erfindung ein Verfahren zum Bremsen einer Werkzeugmaschine, wobei die Werkzeugmaschine eine akkubetriebene Werkzeugmaschine ist und elektrische Energie, die beim Bremsen der Werkzeugmaschine frei wird, in eine Energieversorgungsvorrichtung der Werkzeugmaschine zurückgespeist wird. Das Verfahren wird durch die folgenden Verfahrensschritte gekennzeichnet:

a) Betrieb der Werkzeugmaschine entlang einer MTPA-Kennlinie in einer Raumzeigerdarstellung unter Vorgabe eines ersten Stromwerts,

b) Rückspeisung der elektrischen Energie, die beim Bremsen der Werkzeugmaschine frei wird, in die Energieversorgungsvorrichtung der Werkzeugmaschine,

c) Reduzierung einer Bremsleistung der Werkzeugmaschine, wenn mindestens ein Grenzwert der Energieversorgungsvorrichtung überschritten wird,

d) Weiterbetrieb der Werkzeugmaschine mit Sollstromwerten für die d- und die q-Achse der Raumzeigerdarstellung, wobei die Sollstromwerte für die d- und die q-Achse basierend auf der Reduzierung der Bremsleistung der Werkzeugmaschine und des ersten Stromwerts berechnet werden.

Es ist im Sinne der Erfindung bevorzugt, dass auch im Falle der Drehung des Stromraumzeiger I_S, max ein Korrekturfaktor k_Dreh ermittelt werden kann. Vorzugsweise kann der Korrekturfaktor k_Dreh auf eine Winkellage des Stromraumzeigers I_S,max angewendet werden, so dass eine Drehung des Stromraumzeigers I_S,max mit einem geänderten Bremswinkel ß_brems erhalten wird.

In einer weiteren besonders bevorzugten Ausgestaltung der Erfindung kann die Bremsleistung der Werkzeugmaschine dadurch reduziert werden, dass mindestens ein Korrekturfaktor k ermittelt und auf den maximalen Motorstrom I_S, max angewendet wird. Dadurch kann ein reduzierter Sollwert I_S, red für den Motorstrom erhalten werden, basierend auf dem dann wieder die geänderten Sollstromwerte, vorzugsweise für die d- und die q-Achse der Raumzeigerdarstellung, ermittelt und die Bremsleistung der Werkzeugmaschine auf diese Weise verringert werden. Der reduzierte Sollwert I_S, red für den Motorstrom kann an einen Motorstromregler weitergegeben werden, so dass der Motorstrom basierend auf dem reduzierten Sollwert I_S, red geregelt bzw. eingestellt werden kann. Es ist im Sinne der Erfindung bevorzugt, dass in dieser Ausgestaltung die Bremsleistung der Werkzeugmaschine dadurch reduziert wird, dass der Stromraumzeiger verkürzt wird. Mit anderen Worten für die Anwendung des Korrekturfaktors k auf den maximalen Motorstrom I_S, max zu einer Verkürzung des Stromraumzeiger, wodurch vorteilhafterweise die Bremsleistung der Werkzeugmaschine dadurch reduziert werden kann.

In einer weiteren besonders bevorzugten Ausgestaltung der Erfindung kann die Werkzeugmaschine unter Vorgabe des maximalen Motorstroms I_S, max betrieben werden. Die die Bremsleistung der Werkzeugmaschine kann entweder dadurch verringert werden, dass mindestens einem Korrekturfaktors k ermittelt und auf den maximalen Motorstrom I_S, max angewendet wird, so dass ein reduzierter Sollwert I_S, red für den Motorstrom erhalten wird oder dadurch, dass der Stromraumzeiger I_S, max in der Raumzeigerdarstellung gedreht wird, so dass eine Länge des Stromraumzeigers I_S, max im Wesentlichen unverändert bleibt. Die Drehung des Stromraumzeigers I_S, max kann vorzugsweise dadurch erfolgen, dass ein geänderter Bremswinkel β_brems auf den Stromraumzeiger I_S, max angewendet wird.

Durch die Drehung des Stromraumzeigers I_S, max kann ein Arbeitspunkt des Motors der Werkzeugmaschine auf ein geringeres Drehmoment und damit auch eine geringere Bremsleistung eingestellt werden, ohne die Statorstromamplitude zu verkleinern. Dieser hohe Statorstrom kann dann weiter hohe Verluste innerhalb eines Inverters, der Elektronik und/oder des Motors verursachen, so dass die Bremsenergie aufgenommen und in Wärme umgewandelt werden kann. Vorzugsweise kann selbst bei begrenzter Leistungsaufnahme beim Zurückspeisen von elektrischer Energie in die Energieversorgungsvorrichtung eine überraschend große Verlustleistung in der Elektronik, dem Inverter und/oder dem Motor der Werkzeugmaschine umgesetzt werden. Dadurch kann vorteilhafterweise eine zusätzliche Leistungssenke geschaffen und der Bremsvorgang noch schneller gemacht werden. Insbesondere kann durch die Anwendung des geänderten Bremswinkels β_brems und der dadurch bewirkten Drehung des Stromraumzeigers I_S, max in der Raumzeigerdarstellung ein mit großen Verlusten behafteter generatorischer Bremsbetrieb für eine Werkzeugmaschine zum Abbremsen ihres Werkzeugs bereitgestellt werden, wobei das vorgeschlagene Verfahren zunächst ohne einen Bremschopper auskommt. Vorzugsweise kann der Bremswinkels β_brems im Sinne der Erfindung bevorzugt auch als "Statorstromraumzeigerwinkel β_brems" bezeichnet werden.

Es ist im Sinne der Erfindung bevorzugt, dass bei der Drehung des Stromraumzeigers I_S, max zur Reduzierung der Bremsleistung der Akku-Spannungsregler und der Akku-Stromregler dazu verwendet werden, Korrekturfaktoren als Stellgröße zu ermitteln bzw. auszugeben. Eine solche Reduzierung der Bremsleistung ist insbesondere dann bevorzugt, wenn die Energieversorgungsvorrichtung und ein optionaler Bremswiderstand, wie ein Bremschopper, ihre maximale Leistungsaufnahme erreicht haben. Dadurch kann vorteilhafterweise erreicht werden, dass Acku-Grenzwerte eingehalten werden und die Energieversorgungsvorrichtung nicht beschädigt wird. Insbesondere kann durch die Drehung des Stromraumzeigers ein Arbeitspunkt in der Raumzeigerdarstellung mit einem verringerten Bremsmoment erhalten werden. Das verringerte Bremsmoment kann insbesondere durch einen verkürzten Stromraumzeiger und/oder durch einen gedrehten Stromraumzeiger erhalten werden.

Der Korrekturfaktor k kann verschiedene Anteile umfassen oder von unterschiedlichen Einzel-Korrekturfaktoren gebildet werden. Beispielsweise kann ein Korrekturfaktor k_U,red für die Acku-Spannung und/oder ein Korrekturfaktor k_I,red für den Akku-Stromregler vorgesehen sein. Neben den Korrekturfaktoren k_U,red und k_I,red kann auch das Tastverhältnis eines optionalen Bremschoppers bei der Berechnung des Bremswinkels berücksichtigt werden. Mit anderen Worten kann es im Sinne der Erfindung bevorzugt sein, dass der zusammengefasste Korrekturfaktor k_red auch einen Anteil umfasst, der mit dem Tastverhältnis des Bremschoppers in Verbindung steht. Dies insbesondere dann, wenn die Werkzeugmaschine einen Bremschopper aufweist. Diese Korrekturfaktoren können unter der Bezeichnung Korrekturfaktor k zusammengefasst werden, wobei der Oberbegriff für die Korrekturfaktoren in den Blockschaltbildern als "k_red" bezeichnet wird. Es ist im Sinne der Erfindung bevorzugt, dass der zusammengefasste Korrekturfaktor k_red auch einen Anteil umfasst, der mit dem Tastverhältnis des Bremschoppers in Verbindung steht. Dies insbesondere dann, wenn die Werkzeugmaschine einen Bremschopper aufweist. Der Korrekturfaktor k kann somit für den Akku-Spannungskorrekturfaktor k_U,red stehen oder für den Akku-Stromkorrekturfaktor k_I,red oder für einen Korrekturfaktor, der das Tastverhältnis des Bremschoppers abbildet. Darüber hinaus kann der Korrekturfaktor k ein gemischter Korrekturfaktor sein, der Anteile dieser genannten Korrekturfaktoren oder Teilmengen dieser Korrekturfaktoren umfasst.

Die Fähigkeit, elektrische Energie aufzunehmen, kann bei einem Bremschopper begrenzt sein, wenn ein Einschalttastverhältnis von 100 % oder im Wesentlichen 100 % erreicht wird. Um eine solche Beschränkung durch das Einschalttastverhältnis zu umgehen, kann es im Sinne der Erfindung bevorzugt sein, einen vergleichsweise niederohmigen Bremschopper zu verwenden. Vorzugsweise kann der Bremschopper einen elektrischen Widerstand aufweisen, der in einem Bereich von 0,1 bis 2 Ohm liegt. Solche Bremschopper oder Bremswiderstände werden im Sinne der Erfindung bevorzugt als "niederohmige Bremschopper" bezeichnet.

Wenn die Werkzeugmaschine einen Bremschopper umfasst, kann eine Energieverteilung bei dem vorgeschlagenen Bremsverfahren wie folgt beschrieben werden: Zunächst wird die freiwerdende Bremsenergie in die Energieversorgungsvorrichtung zurückgespeist. Wenn die Energieversorgungsvorrichtung die Bremsenergie bzw. die Bremsleistung nicht mehr aufnehmen kann, kann die verbleibenden überschüssige Energie in den Bremschopper geleitet werden. Wenn der Bremschopper die Bremsenergie bzw. die Bremsleistung nicht mehr aufnehmen kann, kann die Bremsleistung des Motors durch ein kleineres Bremsmoment reduziert werden.

Vorzugsweise kann der Bremswinkels β_brems im Sinne der Erfindung bevorzugt auch als "Statorstromraumzeigerwinkel β_brems" bezeichnet werden. Dieser Bremswinkel β_brems kann im Kontext der vorliegenden Erfindung wie folgt berechnet werden:

$$\beta_{brems} = k_{red} \cdot ( \beta_{brems,\ MTPA} - \beta_{brems,\ 0\ Nm} ) + \beta_{brems,\ 0\ Nm}.$$

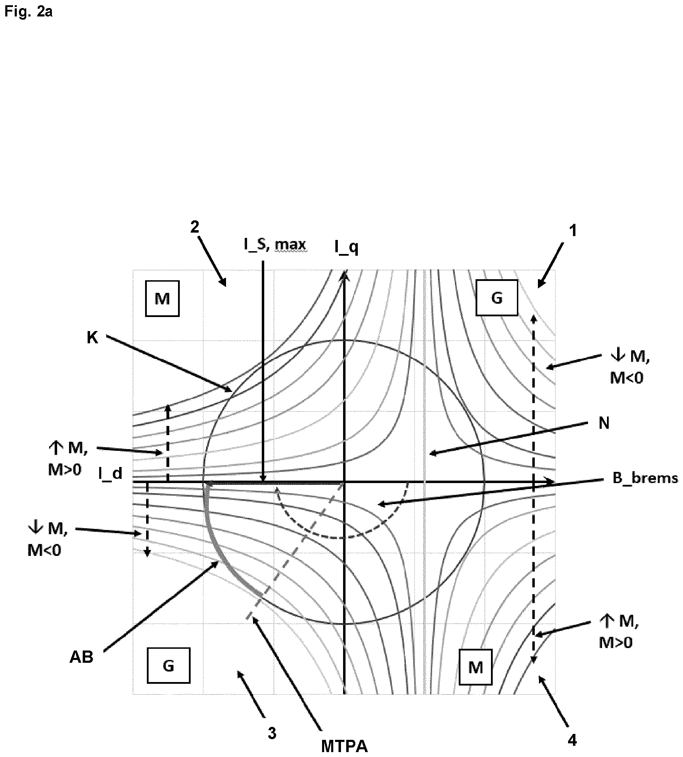

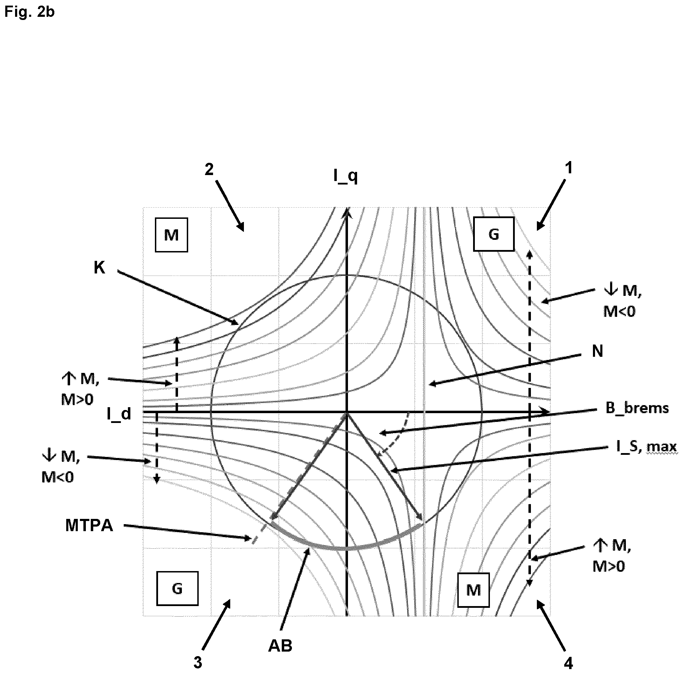

Der Parameter $\beta_{brems,\ MTPA}$ entspricht vorzugsweise dem Winkel auf der MTPA-Kennlinie, während der Parameter $\beta_{brems,\ 0\ Nm}$ dem Stromraumzeigerwinkel entspricht, mit dem ein Arbeitspunkt mit einer Momentenbildung von 0 Nm oder im Wesentlichen 0 Nm erreicht wird. Dieser Arbeitspunkt kann beispielsweise im dritten Quadranten oder im vierten Quadranten der Raumzeigerdarstellung liegen. Dabei soll zum dritten Quadranten explizit auch die Grenze zum zweiten Quadranten zählen (Begrenzung des dritten Quadranten nach oben) und zum vierten Quadranten explizit auch die Grenze zum ersten Quadranten (Begrenzung des vierten Quadranten nach oben). Wie in Figur 2a zu sehen ist, liegt an der Grenze des dritten zum zweiten Quadranten der Schnittpunkt des Stromlimit-Kreises K mit der 0 Nm-Kennlinie der Raumzeigerdarstellung und es wird vorzugsweise kein Drehmoment erzeugt. Wie in Figur 2b zu sehen ist, kann auch der Schnittpunkt des Stromlimit-Kreises K mit der 0 Nm-Kennlinie im vierten Quadranten liegen. Aus dem maximalen Statorstrom I_S, max und dem Stromraumzeigerwinkel $\beta_{brems}$ können vorteilhafterweise die Sollstromwerte, vorzugsweise für die d-Achse und die q-Achse der Raumzeigerdarstellung, berechnet.

Es ist im Sinne der Erfindung bevorzugt, dass das Bremsmoment durch den gedrehten Bremswinkel bzw. Statorstromraumzeigerwinkel β_brems reduziert wird, während die Verluste im Inverter und/oder im Motor der Werkzeugmaschine durch die im Wesentlichen gleichbleibende Motorstromamplitude weiterhin die maximale Bremsleistung aufnehmen, so dass in Summe mit der Erfindung ein besonders schnelles Abbremsen des Werkzeugs der Werkzeugmaschine erreicht werden kann.

Es ist im Sinne der Erfindung bevorzugt, dass ein Arbeitsbereich eines Stromraumzeigers I_S von einem Korrekturfaktor k in seiner Länge und/oder in seinem Stromzeigerwinkel begrenzt wird, so dass ein erster Grenzwert U_Akku, max und/oder ein zweiter Grenzwert I_Akku, max der Energieversorgungsvorrichtung nicht überschritten wird/werden. Vorzugsweise kann ein Arbeitsbereich eines Stromraumzeigers I_S von einem Stromlimit eines Inverters der Werkzeugmaschine begrenzt werden, wobei insbesondere die Vorsehung eines Korrekturfaktors K, der auf eine Länge und/oder einen Winkel des Stromraumzeigers I_S angewendet werden kann, vorteilhafterweise dazu führt, dass die Grenzwerte für Spannung und/oder Strom der Energieversorgungsvorrichtung nicht überschritten werden. Es ist im Sinne der Erfindung bevorzugt, dass der längste Stromraumzeiger I_S auf der MTPA-Kennlinie liegt, die vorzugsweise durch das Strom-limit des Inverters der Werkzeugmaschine begrenzt wird, wenn ein unbegrenztes Rekuperieren von elektrischer Energie in die Energieversorgungsvorrichtung der Werkzeugmaschine erfolgt. Die Begrenzung des Arbeitsbereiches des Stromraumzeigers I_S durch das Stromlimit des Inverters der Werkzeugmaschine kann insbesondere dadurch erfolgen, dass der Stromraumzeigers I_S bei Erreichen der Grenzwerte U_Akku, max und/oder Grenzwert I_Akku, max auf diese begrenzt wird, so dass die Grenzwerte der Energieversorgungsvorrichtung nicht überschritten werden.

Das Überschreiten dieser Grenzwerte der Energieversorgungsvorrichtung kann gemäß einer Ausgestaltung der vorliegenden Erfindung dadurch verhindert werden, dass mindestens ein Korrekturfaktor k ermittelt und auf den maximalen Motorstrom I_S, max angewendet wird, so dass ein reduzierter Sollwert I_S, red für den Motorstrom erhalten wird. Vorteilhafterweise kann auf diese Weise eine aktive Regelung der Akku-Spannung und/oder des Akku-Stroms ermöglicht werden und ein ausgewogener Kompromiss zwischen maximaler Rückspeise-Effizienz und Batterie-Schutz bereitgestellt werden. Die Ermittlung des mindestens einen Korrekturfaktors k erfolgt vorzugsweise in einem dafür vorgesehen Regler, wobei ein Spannungs-Korrekturfaktor k_U, red von einem Spannungsregler und eine Strom-Korrekturfaktor k_I, red von einem Stromregler innerhalb der Elektronik der Werkzeugmaschine bereitgestellt werden kann. Bei dem Spannungs- und Stromregler handelt es sich vorzugsweise um Spannungs- und Stromregler der Energieversorgungsvorrichtung. Vorzugsweise ist somit der Akku-Spannungsregler dazu eingerichtet, einen Akku-Spannungs-Korrekturfaktor k_U, red zu ermitteln, während der Akku-Stromregler dazu eingerichtet, einen Akku-Strom-Korrekturfaktor k_I, red zu ermitteln. Die entsprechenden Korrekturfaktoren k_U, red und k_I, red können vorzugsweise Werte in einem Bereich zwischen 0 und 1 annehmen. Als Ausgangsgröße dieses Regelungs- bzw. Korrekturprozesses wird vorzugsweise ein reduzierter Motorstatorsollstrom I_S, red als Ausgangsgröße ausgegeben. Es ist im Sinne der Erfindung bevorzugt, dass dieser reduzierter Motorstatorsollstrom I_S, red auch als reduzierter Motorstrom I_S, red bezeichnet wird. Der fest vorgegebene maximale Motorstrom I_S, max kann somit mit den Korrektur- bzw. Reduktionsfaktoren k_U, red und k_I, red multipliziert werden, so dass ein verminderter Sollstromwert I_S, red an die Motorstromregler weitergegeben werden kann. Vorzugsweise kann ein erster Stromwert, beispielsweise der maximale Motorstrom I_S, max, mit dem Akkuspannungs-Korrekturfaktor k_U, red und/oder dem Akkustrom-Korrekturfaktor k_I, red multipliziert werden, um Sollstromwerte, vorzugsweise für die d- und die q-Achse, als zweite Stromwerte im Sinne der Erfindung zu erhalten, mit denen die Werkzeugmaschine weiter betrieben werden kann.

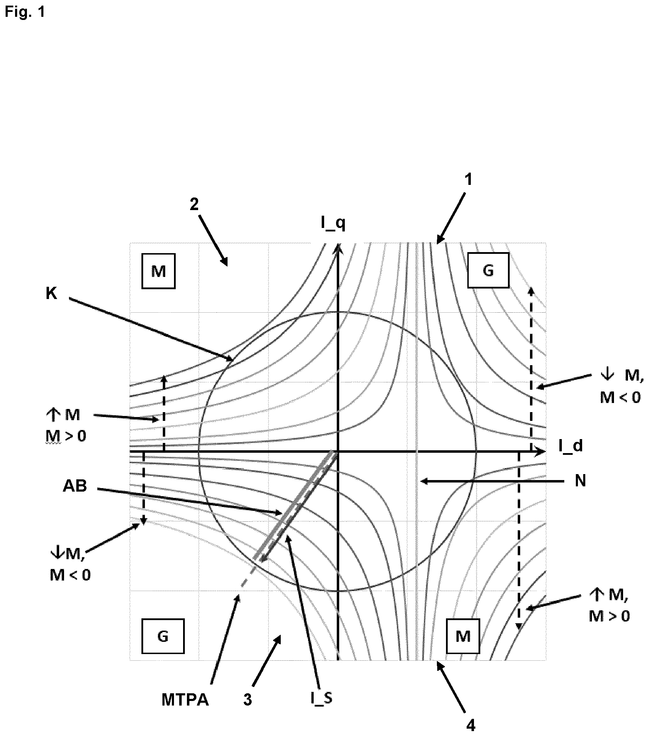

In der entsprechenden Raumzeigerdarstellung (vgl. Figur 1) ist der Arbeitsbereich AB des sog. Stromraumzeigers I_S dargestellt. Ohne eine Begrenzung der Energierückspeisung, d.h. der "Akku-Rekuperation", ergibt sich der längste Stromraumzeigers I_S auf der MTPA-Kennlinie. Der Stromraumzeiger I_S stellt insbesondere einen Statorstromraumzeiger dar, d.h. es wird insbesondere der Raumzeiger für den Statorstrom des Elektromotors der Werkzeugmaschine dargestellt. Es ist im Sinne der Erfindung bevorzugt, dass der Stromraumzeiger I_S durch ein Stromlimit des Inverters der Elektronik der Werkzeugmaschine begrenzt wird. Dieses Stromlimit des Inverters ist in der in Figur 1 abgebildeten Raumzeigerdarstellung ebenfalls dargestellt, und zwar als Kreis K. Vorzugsweise kann der Stromraumzeiger I_S bei Erreichen des Akku-Grenzwerts für die Spannung (U_Akku, max) und/oder bei Erreichen des Akku-Grenzwerts für den Strom (I_Akku, max) so weit verkürzt werden, dass die Akku-Grenzwerte nicht überschritten werden. Die Verkürzung des Stromraumzeiger I_S erfolgt vorzugsweise durch die Anwendung des mindestens einen Korrekturfaktors k.

Die Bezeichnung "Korrekturfaktor k" stellt einen Oberbegriff für verschiedene Korrekturfaktoren dar. Es kann sich dabei beispielsweise um die Korrekturfaktoren k_U, red und k_I, red zur Begrenzung des maximale Motorstrom I_S, max auf einen reduzierten Motorstrom I_S, red handeln, wobei im Kontext der Erfindung mindestens ein Korrekturfaktor k auf den Sollwert für den maximalen Motorstrom angewendet wird. Ein weiterer Korrekturfaktor k_red kann beispielsweise für eine Begrenzung des Tastverhältnisses (Dutycycle) sorgen, wenn ein Bremschopper verwendet wird., d.h. wenn elektrische Energie nicht nur in die Energieversorgungsvorrichtung zurückgespeist wird, sondern darüber hinaus in einen Bremswiderstand, der im Sinne der Erfindung bevorzugt als "Bremschopper" bezeichnet wird. Es ist im Sinne der Erfindung bevorzugt, dass der mindestens eine Korrekturfaktor k in einem Wertebereich zwischen 0 und 1 liegt.

Es ist im Sinne der Erfindung bevorzugt, dass sich der mindestens eine Korrekturfaktor k aus einem ersten Korrekturfaktor k_U, red, einem zweiten Korrekturfaktor k_I, red und/oder einem dritten Korrekturfaktor k_red zusammensetzt, wobei der erste Korrekturfaktor k_U, red durch einen Spannungsregler der Energieversorgungsvorrichtung ermittelt wird und der zweite Korrekturfaktor k_I, red durch einen Stromregler der Energieversorgungsvorrichtung ermittelt wird und der dritte Korrekturfaktor k_red zur Begrenzung eines Tastverhältnisses eingesetzt wird.

Es ist im Sinne der Erfindung bevorzugt, dass der mindestens eine Korrekturfaktor k einem ersten Korrekturfaktor k_U, red entspricht, der durch einen Spannungsregler der Energieversorgungsvorrichtung ermittelt wird, oder einem zweiten Korrekturfaktor k_I, red entspricht, durch einen Stromregler der Energieversorgungsvorrichtung ermittelt oder einem dritten Korrekturfaktor k_red zur Begrenzung eines Tastverhältnisses entspricht.

Der Spannungsregler und der Stromregler der Energieversorgungsvorrichtung sind insbesondere dann zur Ermittlung der entsprechenden Korrekturfaktoren k_U, red und k_I, red vorgesehen, wenn kein Bremschopper verwendet wird. Die Werkzeugmaschine bzw. ihre Elektronik kann darüber hinaus oder ergänzend weitere Regler umfassen. Insbesondere, wenn im Kontext der Erfindung ein Bremschopper verwendet wird, kann die Werkzeugmaschine bzw. ihre Elektronik drei Regler umfassen. Beispielsweise kann ein erster Regler vorgesehen sein, der vorzugsweise als Zweipunktregler mit Hysterese ausgebildet ist und dazu eingerichtet ist, den Bremschopper anzusteuern. Es ist im Sinne der Erfindung bevorzugt, dass dieser erste Regler als Komparator mit Schalthysterese ausgebildet ist, wobei der erste Regler vorzugsweise eine obere Einschaltschwelle und eine untere Ausschaltschwelle umfasst bzw. durch solche Schwellen gekennzeichnet ist. Der erste Regler ist insbesondere dazu ausgebildet, eine Zwischenkreisspannung oder eine Spannung U_Akku der Energieversorgungsvorrichtung mit einer Referenzspannung U_Chopper des Bremschoppers zu vergleichen. Das Ausgangssignal des ersten Reglers kann vorzugsweise ein Signal für eine Pulsweitenmodulation (PWM) darstellen oder bilden, wobei der erste Regler insbesondere dann, wenn die Spannung U_Akku der Energieversorgungsvorrichtung größer ist als die Referenzspannung U_Chopper des Bremschoppers, ein High-Pegel-Signal ausgibt. Mit anderen Worten ist der erste Regler dazu eingerichtet, ein PWM-Signal auszugeben, das insbesondere dann, wenn U_Akku > U_Chopper ein High Pegel ist. Das PWM-Signal kann ein Tastverhältnis aufweisen, wobei das Tastverhältnis beispielsweise durch einen Tiefpassfilter gebildet werden kann.

In einer alternativen Ausgestaltung der Erfindung kann der erste Regler auch als PI-Regler ausgebildet sein. Es ist im Sinne der Erfindung bevorzugt, dass die Ausgangsgröße des bevorzugt als PI-Reglers ausgebildeten ersten Reglers ein Tastverhältnis für den Bremschopper ist. Vorzugsweise können aus diesem Tastverhältnis Ansteuerpulse für den Bremschopper erzeugt werden. Dazu kann beispielsweise ein PWM-Modul verwendet werden. Mit anderen Worten kann das PWM-Modul dazu ausgebildet sein, aus einem Tastverhältnis, das von einem als PI-Regler ausgegeben wird, Ansteuerpulse für einen Bremschopper zu erzeugen.

Die Werkzeugmaschine bzw. ihre Elektronik kann einen zweiten Regler aufweisen, der zur Überwachung der Grenzwerte der Energieversorgungsvorrichtung ausgebildet ist. Die Grenzwerte der Energieversorgungsvorrichtung können beispielsweise die Spannung und/oder den Strom betreffen; sie werden entsprechend bevorzugt als U_Akku, max oder als I_Akku, max bezeichnet. Es ist im Sinne der Erfindung insbesondere bevorzugt, dass der zweite Regler dazu eingerichtet ist, den Strom der Energieversorgungsvorrichtung, d.h. den «Akkustrom», auf den Grenzwert I_Akku, max zu regeln. Vorzugsweise gibt der zweite Regler als Stellgröße die Referenzspannung U_Chopper für den Bremschopper aus, wobei diese Ausgangsspannung U_Chopper ihrerseits auf den Maximalwert bzw. den Grenzwert U_Akku, max geregelt werden kann, um sicherzustellen, dass die maximal zulässige "Akkuspannung", d.h. die Spannung der Energieversorgungsvorrichtung, nicht überschritten wird.

Die Werkzeugmaschine bzw. ihre Elektronik kann einen dritten Regler aufweisen, der für die Begrenzung von Tastverhältnissen verwendet wird. Der dritte Regler kann insbesondere dazu ausgebildet sein, das Tastverhältnis auf einen Sollwert D_Soll von maximal ca. 95 % des Einschaltzeittastverhältnis des Bremschoppers zu regeln. Der dritte Regler kann als Ausgangsgrö-ße einen Korrektur- oder Reduktionsfaktor k_red ausgeben, der wie bei beiden anderen Korrekturfaktoren k_U, red und k_I, red in einem Wertebereich zwischen 0 und 1 liegt. Vorzugsweise wird der Korrekturfaktor k_red im Sinne der Erfindung bevorzugt als «dritter Korrekturfaktor» bezeichnet. Es ist im Sinne der Erfindung bevorzugt, dass der dritte Korrekturfaktor k_red mit dem maximalen Motorstatorsollstrom I_S, max multipliziert wird. Auf diese Weise kann vorteilhafterweise der reduzierte Motorstatorsollstrom I_S, red erhalten bzw. ermittelt werden.

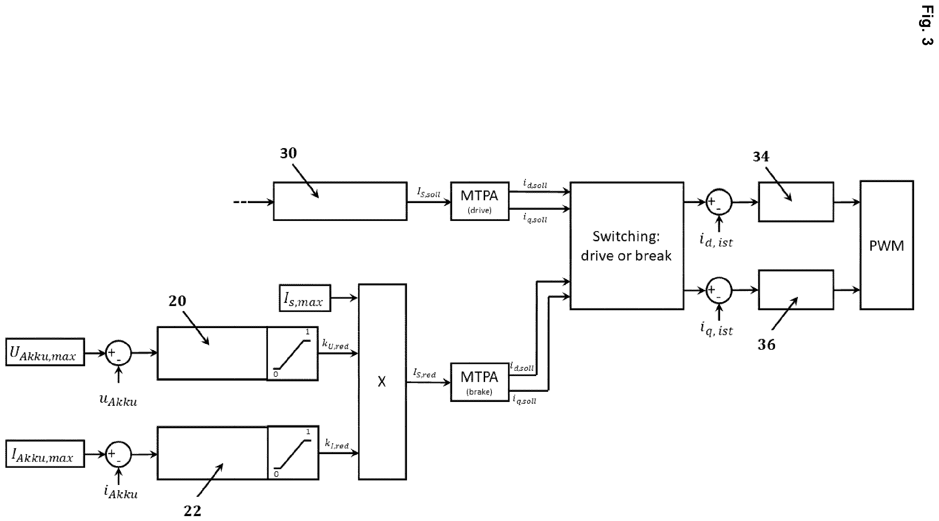

Die Werkzeugmaschine bzw. ihre Elektronik kann eine Begrenzungsvorrichtung für eine Änderungsrate des Motorstroms aufweisen. Die Begrenzungsvorrichtung ist vorzugsweise dazu eingerichtet, einen sanften Übergang vom Antreiben zum Abbremsen der Werkzeugmaschine bzw. ihres Werkzeugs bereitzustellen. Die Begrenzungsvorrichtung kann im Sinne der Erfindung bevorzugt auch als «Änderungsraten-Begrenzer des Motorstroms» bezeichnet werden. Es ist im Sinne der Erfindung bevorzugt, dass die Begrenzungsvorrichtung einen Sprung des Motorstatorsollstroms auf den maximalen Motorstatorstrom I_S, max dadurch vermeidet, dass nur eine maximale Änderungsrate des Motorstatorsollstroms zugelassen wird. Die Änderungsrate wird vorzugsweise in der physikalischen Einheit «Ampere pro Sekunde» angegeben, d.h. Ampere/Sekunde oder A/s. Eine Begrenzungsvorrichtung kann als optionale Komponente an der Werkzeugmaschine vorgesehen sein. Die Begrenzungsvorrichtung kann dann als zusätzlicher Block in den Blockschaltbildern der Figuren 3-6 dargestellt werden, mit dem eine besonders sanfte Transition vom Antreiben zum Abbremsen ermöglicht werden kann.

Das vorgeschlagene Bremsverfahren wird anhand der feldorientierten Regelung (FOC) beschrieben. Es ist aber im Sinne der Erfindung ebenso bevorzugt, das Verfahren mit einer Blockkommutierung durchzuführen. In der Sprache der Raumzeigerdarstellung wird der Arbeitsbereich des Strom- bzw. des Statorstromraumzeigers in Figur 2a und 2b dargestellt.

Die Werkzeugmaschine kann einen Bremschopper umfassen, wobei elektrische Energie, die beim Bremsen des Werkzeugs der Werkzeugmaschine frei wird, von dem Bremschopper aufgenommen wird. Das Bremsverfahren, das von dem Bremschopper Gebrauch macht, stellt ein Rekuperationsverfahren mit effizientem generatorischem Bremsbetrieb mit Bremschopper dar. Es ist im Sinne der Erfindung bevorzugt, dass der Statorstrom I_S erst dann verkürzt wird, wenn mindestens einer der Grenzwerte der Energieversorgungsvorrichtung, beispielsweise U_Akku, max und/oder I_Akku, max die entsprechenden Begrenzungen erreicht hat. Es kann im Sinne der Erfindung auch bevorzugt sein, dass der Statorstrom I_S dann verkürzt wird, wenn das Einschaltzeittastverhältnis des Bremschoppers seine Begrenzung erreicht hat.

Die Verwendung eines Bremschoppers ist insbesondere dann von Vorteil, wenn die Leistungsaufnahme durch die Energieversorgungsvorrichtung begrenzt ist, beispielsweise weil kritische Grenzwerte der Energieversorgungsvorrichtung überschritten werden. Es ist im Sinne der Erfindung bevorzugt, dass der Bremschopper zusätzlich zu der Energieversorgungsvorrichtung elektrische Energie aufnehmen kann, die beim Abbremsen der Werkzeugmaschine frei wird. Vorzugsweise kann die Energieversorgungsvorrichtung einen Grundbetrag an elektrischer Energie aufnehmen und der Bremschopper kann als optionaler Bestandteil an der Werkzeugmaschine vorgesehen sein, um zusätzliche elektrische Energie aufzunehmen, die die Energieversorgungsvorrichtung aufgrund etwaiger technischer Begrenzungen nicht mehr aufnehmen kann. Dadurch kann vorteilhafterweise eine höhere Bremsleistung bereitgestellt werden. Es hat sich gezeigt, dass bei Vorsehung eines Bremschoppers der Einfluss der Energieversorgungsvorrichtung auf das Bremsmoment und die Bremszeit geringer sind als bei Bremsverfahren, die ohne Bremschopper auskommen. Es ist im Sinne der Erfindung bevorzugt, dass eine maximale Verlustleistung innerhalb des Bremschoppers je nach Auslegung begrenzt ist. Die Begrenzung ist insbesondere dann erreicht, wenn ein Tastverhältnis, insbesondere ein Einschaltzeittastverhältnis, des Bremschoppers 100 % oder im Wesentlichen 100 % beträgt. Das Tastverhältnis bzw. das Einschaltzeittastverhältnis kann im Sinne der Erfindung bevorzugt auch als Dutycycle D bezeichnet werden. Wenn ein solches Tastverhältnis oder Einschaltzeittastverhältnis von 100 % oder im Wesentlichen 100 % erreicht wird, ist es im Sinne der Erfindung bevorzugt, dass die Bremsleistung durch einen verringerten Motorstrom, insbesondere einen verringerten Motorstatorsollstrom I_S, red reduziert wird. Dies insbesondere deswegen, weil in diesem Fall die Energieversorgungsvorrichtung und der Bremschopper ihre maximale Leistungsaufnahme erreicht haben.

In einem Ausführungsbespiel der Erfindung kann die Werkzeugmaschine unter Vorgabe eines maximalen Motorstroms I_S, max, insbesondere maximalen Motorstatorsollstroms I_S, max, betrieben werden. Es können dabei ein erster Korrekturfaktors k_U, red durch einen Spannungsregler der Energieversorgungsvorrichtung und/oder ein zweiter Korrekturfaktors k_I, red durch einen Stromregler der Energieversorgungsvorrichtung ermittelt werden, wobei die Korrekturfaktoren auf den maximalen Motorstroms I_S, max angewendet werden können. Auf diese Weise kann ein reduzierter Sollwert I_S, red für den Motorstrom erhalten werden, der weiter umgerechnet werden kann in die zweiten Stromwerte für den fortgesetzten Betrieb der Werkzeugmaschine, insbesondere die Sollstromwerte für die d- und q-Achse in der Raumzeigerdarstellung. Es ist im Sinne der Erfindung bevorzugt, dass der reduzierte Sollwert I_S, red für den Motorstrom kann an einen Motorstromregler weitergegeben wird, so dass der Motorstrom basierend auf dem reduzierten Sollwert I_S, red geregelt bzw. eingestellt werden kann. Bei diesem Verfahren ergibt sich eine Reduzierung der Bremsleistung durch Verkürzen des Statorstromraumzeigers auf der MTPA-Kennline in der Raumzeigerdarstellung. Insbesondere können Korrekturfaktoren angewendet werden, um den Wert eines maximalen Motorstroms I_S, max auf einen reduzierten Sollwert I_S, red für den Motorstrom zu vermindern.

In einem weiteren Ausführungsbeispiel der Erfindung kann die Werkzeugmaschine mindestens ein Korrekturfaktor k ermittelt werden, der auf den maximalen Motorstrom I_S, max angewendet weird, um den reduzierten Sollwert I_S, red für den Motorstrom zu erhalten. Der reduzierte Sollwert I_S, red für den Motorstrom kann an einen Motorstromregler weitergegeben werden, so dass der Motorstrom basierend auf dem reduzierten Sollwert I_S, red geregelt bzw. eingestellt werden kann. Auch bei diesem Verfahren ergibt sich eine Reduzierung der Bremsleistung durch Verkürzen des Statorstromraumzeigers auf der MTPA-Kennlinie in der Raumzeigerdarstellung. Insbesondere kann der mindestens eine Korrekturfaktor angewendet werden, um den Wert eines maximalen Motorstroms I_S, max auf einen reduzierten Sollwert I_S, red für den Motorstrom zu vermindern.

Es ist im Sinne der Erfindung bevorzugt, dass das Werkzeug der Werkzeugmaschine mit einer Bremszeit von in einem Bereich von 2 bis 4 Sekunden gestoppt wird. Das Abbremsen des Werkzeugs der Werkzeugmaschine mit einer Bremszeit zwischen 2 und 4 Sekunden (s) kann insbesondere die Bauteile und Komponenten im Antriebsstrang der Werkzeugmaschine schonen. Es ist im Sinne der Erfindung bevorzugt, dass das Bremsmoment der Werkzeugmaschine so eingestellt werden kann, dass Bremszeiten zwischen 2 und 4 s erreicht werden können.

Wenn von der Werkzeugmaschine ein Kickback-Ereignis erkannt wird, kann es im Sinne der Erfindung bevorzugt sein, dass das Werkzeug der Werkzeugmaschine mit einer Bremszeit von kleiner als 1,5 Sekunden, bevorzugt kleiner als 1 Sekunde, am meisten bevorzugt kleiner als 0,5 Sekunden gestoppt wird. Auf diese Weise kann das Werkzeug der Werkzeugmaschine so schnell, wie möglich, abgebremst werden, um den Nutzer der Werkzeugmaschine optimal vor Verletzungen zu schützen. Die Formulierung, dass die Werkzeugmaschine oder ihr Werkzeug gestoppt wird, bedeutet im Sinne der Erfindung, dass das Werkzeug der Werkzeugmaschine zum Stillstand gebracht wird. Die Formulierung, dass die Werkzeugmaschine oder ihr Werkzeug gestoppt wird, kann aber im Sinne der Erfindung ebenso gut bedeuten, dass dem Werkzeug ein Großteil seiner Rotationsenergie genommen wird und sich das Werkzeug der Werkzeugmaschine nur noch in einem für den Nutzer weniger gefährlichen Drehzahlbereich weiterdreht. Die Formulierung "Großteil seiner Rotationsenergie" kann im Sinne der Erfindung bevorzugt bedeuten, dass mehr als 50 % der Rotationsenergie des Werkzeugs in eine andere Energieform umgewandelt und/oder in die Energieversorgungsvorrichtung zurückgespeist werden. Es ist im Sinne der Erfindung ganz besonders bevorzugt, dass im Kontext des vorgeschlagenen Bremsverfahrens mehr als 60 %, 70 %, 80 %, 90 % oder 95 % der Rotationsenergie des Werkzeugs in eine andere Energieform umgewandelt und/oder in die Energieversorgungsvorrichtung zurückgespeist werden. Vorzugsweise kann das Werkzeug der Werkzeugmaschine mit einer Bremszeit von kleiner als 1,5 Sekunden, bevorzugt kleiner als 1 Sekunde, am meisten bevorzugt kleiner als 0,5 Sekunden so abgebremst werden, dass das Werkzeug der Werkzeugmaschine einen Großteil seiner Rotationsenergie verliert. Das bedeutet im Sinne der Erfindung bevorzugt, dass dem Werkzeug der Werkzeugmaschine mehr als 50 %, bevorzugt mehr als 60 %, 70 %, 80 %, 90 % oder 95 % einer Rotationsenergie entzogen wird und dass mehr als 50 %, bevorzugt mehr als 60 %, 70 %, 80 %, 90 % oder 95 % der Rotationsenergie in eine andere Energieform umgewandelt und/oder in die Energieversorgungsvorrichtung zurückgespeist wird. Selbstverständlich sind auch alle Zwischenwerte zwischen 50 und 100 % möglich, die mit der Formulierung "Großteil der Rotationsenergie" gemeint sein sollen, also beispielsweise mehr als 53 %, mehr als 66,66 %, mehr als 75 %, mehr als 87,5 % oder mehr als 93,76 %.

Das Abbremsen der Werkzeugmaschine bzw. ihres Werkzeugs erfolgt dabei durch das vorgeschlagene Bremsverfahren, bei dem die Bremsleistung der Werkzeugmaschine dann reduziert wird, wenn mindestens ein Grenzwert der Energieversorgungsvorrichtung überschritten wird und die Werkzeugmaschine mit Sollstromwerten, insbesondere für die d- und die q-Achse der Raumzeigerdarstellung, weiterbetrieben wird, wobei die Sollstromwerte, insbesondere für die d- und die q-Achse, basierend auf der Reduzierung der Bremsleistung der Werkzeugmaschine und des ersten Stromwerts berechnet werden. Der Verlust an Rotationsenergie, den das Werkzeug der Werkzeugmaschine durch das Abbremsen erleidet, kann vorteilhafterweise in die Energieversorgungsvorrichtung der Werkzeugmaschine zurückgespeist werden, so dass diese Energie später für die weitere Energieversorgung der Werkzeugmaschine wieder zur Verfügung steht. Mit anderen Worten kann die Energieversorgungsvorrichtung der Werkzeugmaschine durch das vorgeschlagene Bremsverfahren zumindest teilweise wieder aufgeladen werden, in dem Rotationsenergie, die beim Bremsen der Werkzeugmaschine oder ihres Werkzeugs frei wird, in die Energieversorgungsvorrichtung der Werkzeugmaschine zurückgespeist, d.h. rekuperiert wird. Dabei ist es im Sinne der Erfindung ganz besonders bevorzugt, dass das Werkzeug oder die Werkzeugmaschine nicht vollständig gestoppt, d.h. Stillstand gebracht werden müssen, sondern dass dem Werkzeug der Werkzeugmaschine nur ein Großteil seiner Rotationsenergie entzogen bzw. genommen wird. Die Bremszeit t_down endet dann vorzugsweise nicht bei Stillstand des Werkzeugs, sondern wenn die Drehzahl n des Werkzeugs einen Wert von beispielsweise weniger als 70 %, bevorzugt weniger als 63 %, 55 %, 45 %, 32 %, 22 % oder einen noch geringeren Anteil der ursprünglichen Drehzahl n_max erreicht hat. Auf die Zeitspanne bis zum tatsächlichen Stillstand des Werkzeugs der Werkzeugmaschine kommt es dann vorteilhafterweise nicht mehr an.

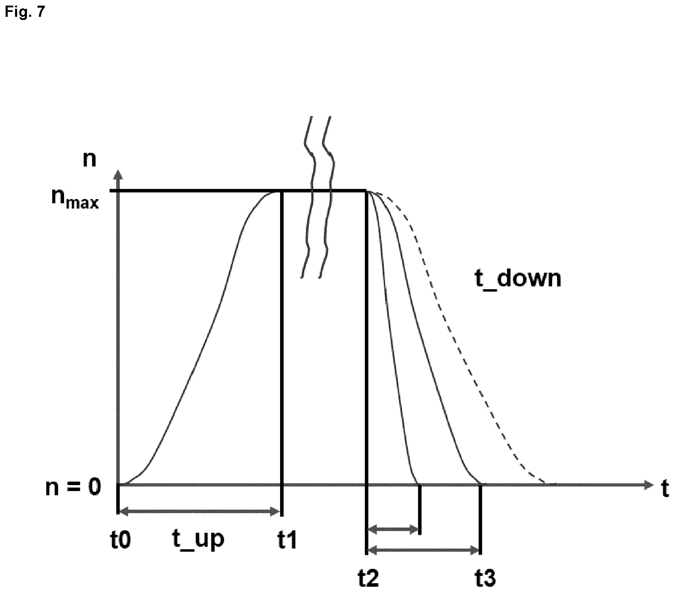

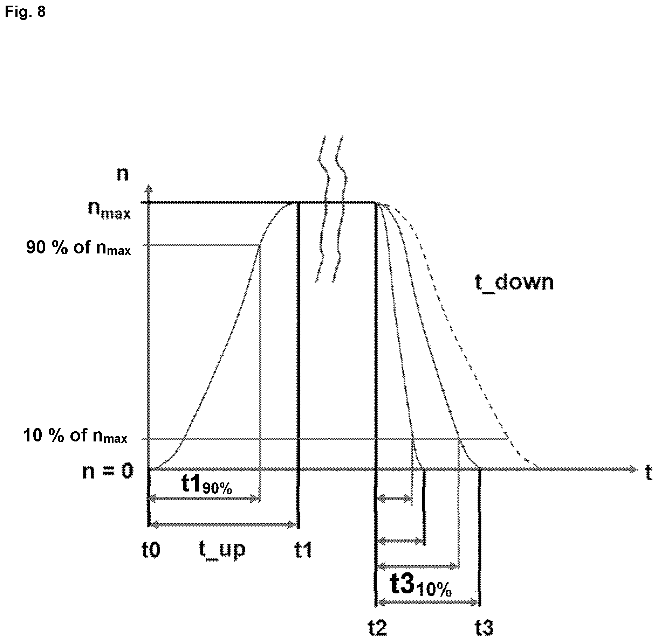

Die Bremszeit t_down, d.h. die Zeitpanne, die die Werkzeugmaschine benötigt, um gestoppt oder zum Stillstand gebracht zu werden, wird von den Zeitwerten t2 und t3 begrenzt. Vorzugsweise beginnt bei der Zeit t2 das Abbremsen der Werkzeugmaschine bzw. ihres Werkzeugs, während das Werkzeug der Werkzeugmaschine bei der Zeit t3 stillsteht. Der Stillstand des Werkzeugs ist gleichbedeutend damit, dass sich das Werkzeug mit 0 % der ursprünglichen Drehzahl n_max des Werkzeugs dreht. Wenn dem Werkzeug aber nur ein Großteil seiner Rotationsenergie entzogen bzw. genommen wird, reduziert sich die Drehzahl des Werkzeugs vorzugsweise auf weniger als 70 %, bevorzugt weniger als 63 %, 55 %, 45 %, 32 %, 22 % der ursprünglichen Drehzahl n_max des Werkzeugs oder auf einen noch geringeren Anteil bzw. Wert. Die entsprechenden Endzeiten der Bremszeit t_down werden dann im Sinne der Erfindung bevorzugt als t3_70 %, t3_63 %, t3_55 %, t3_45 %, t3_32 %, oder t3_22 % bezeichnet. Beispielsweise kann die Bremszeit t_down bei einem Zeitwert t3_22 % enden, wobei der Zeitwert t3_22 % einer Drehzahl von 22 % der ursprünglichen Drehzahl n_max des Werkzeugs der Werkzeugmaschine entspricht. Somit bildet der Zeitwert t3_22 % zusammen mit einem Drehzahlwert von 22 % der ursprünglichen Drehzahl n_max des Werkzeugs ein Wertepaar, das in einer Auftragung der Drehzahl n gegenüber der Zeit t dargestellt werden kann und zusammen mit anderen Wertepaaren den Graph n(t) bildet. Solche Auftragungen sind in den Figuren 7 und 8 dargestellt. Es ist im Sinne der Erfindung bevorzugt, dass zwischen der Rotationsenergie E und der Drehzahl n des Werkzeugs folgender Zusammenhang besteht:

$$E = 1/2 * J * (2 * \pi * n/60)^2,$$

wobei der Buchstabe J für das Trägheitsmoment des Werkzeugs der Werkzeugmaschine steht. Das bedeutet, dass bei einer Reduzierung der Drehzahl n des Werkszeugs um 50 % nur noch 25 % der ursprünglichen Rotationsenergie E vorhanden sind. Mithin hat sich die Rotationsenergie E in diesem Beispiel um 75 % reduziert, wenn die Drehzahl n des Werkszeugs auf die Hälfte des ursprünglichen Werts abgesenkt wird.

Wenn von der Werkzeugmaschine ein Kickback-Ereignis erkannt wird, kann es im Sinne der Erfindung bevorzugt sein, dass das Werkzeug der Werkzeugmaschine mit einer Bremszeit von kleiner als 1,5 Sekunden, bevorzugt kleiner als 1 Sekunde, am meisten bevorzugt kleiner als 0,5 Sekunden gestoppt wird, wobei die Bremszeit t_down vorzugsweise nicht nur durch Stillstand des Werkzeugs der Werkzeugmaschine gekennzeichnet sein kann. Vielmehr kann die Bremszeit auch dann enden, wenn das Werkzeug der Werkzeugmaschine mit einer Drehzahl von weniger als 70 %, bevorzugt weniger als 63 %, 55 %, 45 %, 32 %, 22 % der ursprünglichen Drehzahl n_max des Werkzeugs rotiert. Vorzugsweise kommt es bei dieser Wahl des Endpunkts t3_x % der Bremszeit t_down auf die Zeitspanne bis zum tatsächlichen Stillstand des Werkzeugs der Werkzeugmaschine nicht mehr an. Der Buchstabe x steht in dem Ausdruck "t3_x %" vorzugsweise für einen beliebigen Prozentwert zwischen 0 und 70 % der ursprünglichen Drehzahl n_max des Werkzeugs.

Der Begriff "Kickback-Ereignis" beschreibt das plötzliche und unerwartete Auftreten einer Kraft zwischen einer Werkzeugmaschine und einem zu bearbeitenden Untergrund. Beispielsweise kann während der Bearbeitung eines Untergrundes durch die Werkzeugmaschine eine unerwartete Bewegung des Werkzeugs der Werkzeugmaschine oder der Werkzeugmaschine selbst erfolgen, durch die eine Gefährdung des Nutzers der Werkzeugmaschine möglich werden kann. Ein solches Kickback-Ereignis kann beispielsweise dann auftreten, wenn sich das Werkzeug der Werkzeugmaschine in dem Untergrund, beispielsweise in einem Schnittspalt, verhakt oder verklemmt. Darüber hinaus kann es zu einem Kickback kommen, wenn der zu bearbeitende Untergrund inhomogene Material-Eigenschaften aufweist, wie zum Beispiels Bewehrungsstangen aus Stahl in Beton, oder wenn ein stumpfes Werkzeug verwendet wird. In all diesen Fällen ist es wünschenswert, dass das Werkzeug der Werkzeugmaschine möglichst schnell gestoppt, d.h. zum Stillstand gebracht, werden kann. Dieses schnelle Abbremsen ermöglicht die Erfindung, indem die Bremszeit nach Erkennen eines Kickback-Ereignisses bei unter 1,5 Sekunden liegt.

Das schnelle Abbremsen des Werkzeugs der Werkzeugmaschine kommt vorzugsweise auch durch das besonders geringe Verhältnis von Brems- zu Beschleunigungszeit von kleiner als 1 zum Ausdruck. Denn es ist im Sinne der Erfindung ganz besonders bevorzugt, dass ein Verhältnis von Bremszeit t_down zu Beschleunigungszeit t_up kleiner als 1 ist. Das bedeutet im Sinne der Erfindung bevorzugt, dass die Bremszeit t_down kleiner ist als die Beschleunigungszeit t_up. Im Fall eines Kickbacks kann das Verhältnis von Bremszeit t_down zu Beschleunigungszeit t_up sogar kleiner als 0,7, besonders bevorzugt kleiner als 0,5 sein. Ein solches Verhältnis von kleiner als 0,5 bedeutet im Sinne der Erfindung bevorzugt, dass die Bremszeit t_down kleiner ist als die Hälfte der Beschleunigungszeit t_up. Der Begriff "Beschleunigungszeit t_up" steht im Sinne der Erfindung bevorzugt für diejenige Zeitspanne, die die Werkzeugmaschine benötigt, um aus dem Stillstand eine maximale Drehzahl n_max zu erreichen. Wenn dem Stillstand der Werkzeugmaschine die Zeit t0 zugeordnet wird und dem erstmaligen Erreichen der maximalen Drehzahl die Zeit t1, so erstreckt sich die Zeitspanne der "Beschleunigungszeit t_up" zwischen den Zeiten t0 und t1. Der Begriff "Bremszeit t_down" steht im Sinne der Erfindung bevorzugt für diejenige Zeitspanne, die die Werkzeugmaschine benötigt, um von dieser maximalen Drehzahl n_max in den Stillstand zu kommen, in dem sich das Werkzeug der Werkzeugmaschine nicht mehr dreht, d.h. die Drehzahl n den Wert "0" annimmt, n = 0 Umdrehungen pro Minute (rounds per minute, rpm). Wenn dem Stillstand der Werkzeugmaschine die Zeit t3 zugeordnet wird und dem Beginn des Abbremsvorgangs die Zeit t2, so erstreckt sich die Zeitspanne "Bremszeit t_down" zwischen den Zeiten t2 und t3. In der Zeitspanne zwischen t1 und t2 kann mit der Werkzeugmaschine gearbeitet werden, beispielsweise indem sie mit unterschiedlichen Drehzahlen betrieben wird. Es ist im Sinne der Erfindung bevorzugt, dass die Werkzeugmaschine zur Einstellung einer Drehzahl einen Drehzahlregler umfasst. Vorzugsweise können die kurzen Bremszeiten im "normalen" Bremsfall und bei Erkennen eines Kickback-Ereignisses durch das vorgeschlagene Bremsverfahren erreicht werden, d.h. indem die in der Werkzeugmaschine gespeicherte Rotationsenergie zum Beispiel in eine Energieversorgungsvorrichtung der Werkzeugmaschine zurückgespeist werden kann und indem die Bremsleistung der Werkzeugmaschine reduziert wird, wenn die Energieversorgungsvorrichtung der Werkzeugmaschine ihre Grenzen für die Aufnahme elektrischer Energie erreicht hat.

Es ist im Sinne der Erfindung bevorzugt, dass das Kickback-Ereignis mit Hilfe einer SensorEinrichtung erkannt wird. Mit anderen Worten kann die Werkzeugmaschine eine SensorEinrichtung umfassen, die dazu eingerichtet ist, Kickback-Ereignisse oder andere Notfälle sicher, schnell und fehlerfrei zu erkennen. Es kann im Sinne der Erfindung auch bevorzugt sein, dass die bestehende bzw. in der Werkzeugmaschine vorhandene Elektronik verwendet wird, um Kickback-Ereignisse zu detektieren. Dazu können beispielsweise Betriebsparameter der Werkzeugmaschine, wie Strom, die Drehzahlen des Motors und/oder der Spindel, Beschleunigungen oder elektrische Energie, über die Informationen in der Werkzeugmaschine bereits vorhanden bzw. bekannt sind, ausgewertet werden, um den Beginn eines Kickback-Ereignisses zu erkennen. Es kann im Sinne der Erfindung auch bevorzugt sein, Erfassungsvorrichtungen, wie Sensoren, an der Werkzeugmaschine vorzusehen, um die genannten Betriebsparameter zu ermitteln und auszuwerten, um Kickback-Ereignisse oder andere Notfälle sicher und schnell zu erkennen.

In einem zweiten Aspekt betrifft die Erfindung eine Werkzeugmaschine zur Durchführung des vorgeschlagenen Verfahrens. Die für das Bremsverfahren eingeführten Begriffe, Definitionen und technischen Vorteile gelten vorzugsweise für die Werkzeugmaschine analog. Der Motor der Werkzeugmaschine ist ein bürstenloser Motor, der vorzugsweise eine Leistung von mehr als 1,8 Kilowatt (kW) abgeben kann. Vorzugsweise kann es sich bei der Werkzeugmaschine um ein bürstenlos gesteuertes Elektrogerät mit Bremsfunktion handeln. Beispielsweise kann die Werkzeugmaschine als elektrisch betriebener Trennschleifer ausgebildet sein. Es ist im Sinne der Erfindung ganz besonders bevorzugt, dass es sich bei der Werkzeugmaschine um einen akkubetriebenen Trennschleifer mit einer Trennscheibe als Werkzeug handelt. Die Werkzeugmaschine kann mit mindestens einer Energieversorgungsvorrichtung verbunden werden, um von der Energieversorgungsvorrichtung mit elektrischer Energie versorgt zu werden. Die mindestens eine Energieversorgungsvorrichtung der Werkzeugmaschine kann beispielsweise eine Spannung von mehr als 20 Volt (V) abgeben. Besonders bevorzugt ist eine Spannung zwischen 21 und 22 V. Die Werkzeugmaschine kann auch zwei oder mehr Energieversorgungsvorrichtungen aufweisen. Wenn die Werkzeugmaschine mehr als eine Energieversorgungsvorrichtung aufweist, kann die elektrische Energie, die beim Abbremsen der Werkzeugmaschine frei wird, in die erste und/oder in die zweite Energieversorgungsvorrichtung zurückgespeist werden. Dieses Rekuperieren kann im Wesentlichen gleichzeitig, nacheinander oder gemäß einem speziell dafür vorgesehenen Algorithmus erfolgen.

Die Trennscheibe stellt ein scheibenförmiges Werkzeug des Trennschleifers dar, das mit dem vorgeschlagenen Bremsverfahren abgebremst und zum Stillstand gebracht werden kann. Die Trennscheibe kann einen Durchmesser aufweisen, der beispielsweise größer als 230 Millimeter (mm) ist. Beispielsweise kann die Trennscheibe Durchmesser von 300 mm, 250 mm oder 400 mm aufweisen, ohne darauf beschränkt zu sein. Ein Gewicht der Trennscheibe kann beispielsweise in einem Bereich zwischen 200 und 2.500 Gramm, d.h. zwischen 0,2 und 2,5 Kilogramm (kg), liegen. Beispielsweise kann das Gewicht der Trennscheibe Werte von 210 Gramm, 530 Gramm, 550 Gramm, 930 Gramm, 1.270 Gramm, 1.280 Gramm, 1.720 Gramm oder 2.450 Gramm annehmen, ohne darauf beschränkt zu sein. Beispielsweise kann es sich bei der Trennscheibe mit eine Diamant-Trennscheibe oder um eine abrasive Trennscheibe mit gebundenen Schleifkörnern handeln. Ein Diamant-Trennscheibe ist vorzugsweise dadurch gekennzeichnet, dass sie einen Stahlkern mit Diamant-Segmenten aufweist.

Es ist im Sinne der Erfindung bevorzugt, dass der Motor der Werkzeugmaschine mit Hilfe einer feldorientierten Regelung oder einer Blockkommutierung regelbar ist. In einer bevorzugten Ausgestaltung der Erfindung ist es bevorzugt, dass der Bremswinkel $\beta\_brems$ geändert werden kann, um die Bremsleistung der Werkzeugmaschine zu reduzieren und den Stromraumzeiger $I\_S$, max in der Raumzeigerdarstellung zu drehen. Wenn der Motor der Werkzeugmaschine mit einer Blockkommutierung geregelt wird, kann es im Sinne der Erfindung auch bevorzugt sein, dass die Kommutierungswinkel geändert werden, um die Bremsleistung der Werkzeugmaschine zu reduzieren. In einer bevorzugten Ausgestaltung werden die Kommutierungswinkel derart geändert, dass die dadurch entstehenden Kommutierungsblöcke nacheilend sind. Die Werkzeugmaschine kann einen Bremschopper umfassen, wobei der Bremschopper dazu eingerichtet ist, elektrische Energie, die beim Bremsen des Werkzeugs der Werkzeugmaschine frei wird, aufzunehmen. Der Bremschopper ist insbesondere dazu eingerichtet ist, neben der Energieversorgungsvorrichtung zusätzliche elektrische Energie aufzunehmen, die die Energieversorgungsvorrichtung aufgrund einer begrenzten Leistungsaufnahme nicht mehr aufnehmen kann.

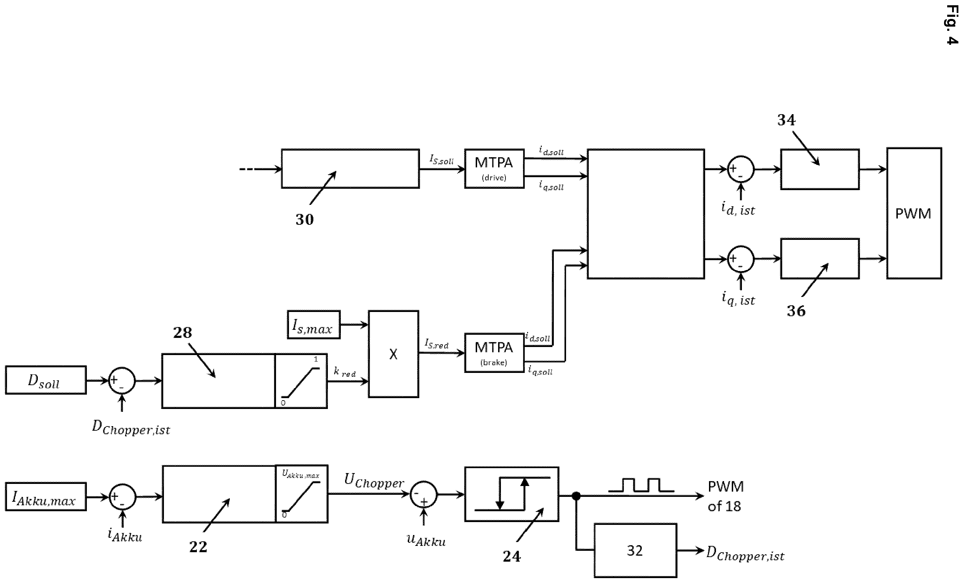

Im Folgenden soll ein Ausführungsbeispiel der Erfindung beschrieben werden, und zwar ein Bremsverfahren mit Rekuperation mit effizientem generatorischem Bremsbetrieb mit Bremschopper, wie es beispielhaft in Figur 4 dargestellt wird. Das PWM-Signal des Bremschoppers kann in dieser Ausgestaltung der Erfindung wie folgt erzeugt werden, wobei das PWM-Signal insbesondere durch den ersten Regler, beispielsweise einen Zweipunktregler, erfolgt. Der erste Regler kann einen Komparator umfassen oder von einem Komparator gebildet werden. Der Komparator ist dazu eingerichtet, die Akkuspannung u_Akku mit der Ausgangsstellgröße des Akkustromreglers U_Chopper zu vergleichen.

Wenn die Akkuspannung u_Akku - ggf. zuzüglich eines Hysterese-Beitrags - größer ist als die Referenzspannung U_Chopper, kann ein High-Pegel am PWM-Signal U_GatedriverinputPWM ausgegeben werden. Anderenfalls wird ein Low-Pegel ausgegeben. Es ist im Sinne der Erfindung bevorzugt, dass die Akkustromwelligkeit, die Akkuspannungswelligkeit und/oder die resultierende Schaltfrequenz über die Breite der Hysterese eingestellt wird.

Es ist im Sinne der Erfindung bevorzugt, das Tastverhältnis des PWM-Signals über einen Tiefpassfilter, vorzugsweise einen RC-Tiefpassfilter, zu ermitteln. Als Regler für den Akkustrom oder das Tastverhältnis können beispielsweise PID-Regler verwendet werden.

Wenn beispielsweise eine Werkzeugmaschine mit einem vergleichsweise kalten und vollen Ackumulator («Akku») gebremst werden soll, so weist der Akku zu Anfang vorzugsweise wegen des hohen Füllstands der Batterie eine hohe Zellspannung auf und wegen der niedrigen Temperaturen einen hohen Zellinnenwiderstand. Beim Zurückspeisen von elektrischer Energie in die Energieversorgungsvorrichtung kann die Akkuspannung schnell ansteigen, so dass innerhalb von kurzer Zeit das Spannungslimit U_Akku, max der Energieversorgungsvorrichtung erreicht wird. Im Rahmen des vorgeschlagenen Bremsverfahrens wird die Spannung vorteilhafterweise auf diesen Grenzwert U_Akku, max begrenzt. Es ist im Sinne der Erfindung bevorzugt, dass die Energieversorgungsvorrichtung über weite Strecken des Bremsvorgangs im Bereich des Spannungslimits U_Akku, max betrieben wird.

Wenn beispielsweise eine Werkzeugmaschine mit einem vergleichsweise warmen und im Wesentlichen halbvollen Akku gebremst werden soll, wird das Spannungslimit U_Akku, max nicht erreicht. Stattdessen kann es in diesem Fall bevorzugt sein, den Akku-Strom durch eine Regelung aktiv auf den Grenzwert zu begrenzen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1 Arbeitsbereich eines möglichen Statorstromraumzeigers in einer Raumzeigerdarstellung bei effizientem generatorischem Bremsbetrieb

Fig. 2a, b Arbeitsbereich eines möglichen Statorstromraumzeigers in einer Raumzeigerdarstellung bei maximal verlustbehaftetem generatorischem Bremsbetrieb

Fig. 3 mögliches Blockschaltbild «Rekuperation» mit effizientem generatorischem Bremsbetrieb ohne Bremschopper

Fig. 4 mögliches Blockschaltbild «Rekuperation» mit effizientem generatorischem Bremsbetrieb mit Bremschopper

Fig. 5 mögliches Blockschaltbild «Rekuperation» mit maximal verlustbehaftetem generatorischem Bremsbetrieb ohne Bremschopper

Fig. 6 mögliches Blockschaltbild «Rekuperation» mit maximal verlustbehaftetem generatorischem Bremsbetrieb mit Bremschopper

Fig. 7 schematische Auftragung der Drehzahl gegen die Zeit zur Verdeutlichung der Brems- und Beschleunigungszeit

Fig. 8 schematische Auftragung der Drehzahl gegen die Zeit zur Verdeutlichung der Brems- und Beschleunigungszeit

Fig. 9 schematische Darstellung einer bevorzugten Ausgestaltung der vorgeschlagenen Werkzeugmaschine

## Ausführungsbeispiele und Figurenbeschreibung:

Figur 1 zeigt eine möglich Raumzeigerdarstellung, die den Betrieb einer Werkzeugmaschine 10 abbildet. Insbesondere zeigt Figur 1 den Arbeitsbereich AB eines möglichen Statorstromraumzeigers I_S in einer solchen Raumzeigerdarstellung in einem effizientem generatorischem Bremsbetrieb der Werkzeugmaschine 10. Auf der x-Achse der Raumzeigerdarstellung ist der I_d-Wert des Stromes, der durch den Motor 12 der Werkzeugmaschine 10 fliesst, dargestellt. Eine Werkzeugmaschine 10 ist schematisch in Fig. 8 dargestellt.

Auf der y-Achse der Raumzeigerdarstellung ist der $I\_q$-Wert des Stromes, der durch den Motor 12 der Werkzeugmaschine 10 fliesst, dargestellt. Der Wert $I\_q$ steht für die momentbildenden Komponente des Stromes, während der Wert $I\_d$ für die feldbildenden Stromkomponente steht.

In Figur 1 sind die vier Quadranten 1, 2, 3 und 4 einer Raumzeigerdarstellung dargestellt. Der erste Quadrant 1 ist durch ein negativ ansteigendes Drehmoment ↓M und einen Generatorbetrieb G gekennzeichnet. Der zweite Quadrant 2 ist durch ein positiv ansteigendes Drehmoment ↑M und einen Motorbetrieb M gekennzeichnet. Der dritte Quadrant 3 ist durch ein negativ ansteigendes Drehmoment ↓M und einen Motorbetrieb M gekennzeichnet. Der vierte Quadrant 4 ist durch ein positiv ansteigendes Drehmoment ↑M und einen Generatorbetrieb G gekennzeichnet. Die ansteigenden bzw. abfallenden Drehmomente der Drehmomenthyperbeln werden in den Figuren 1 und 2 durch gestrichelte Pfeile symbolisiert. Die Drehmomenthyperbeln werden vorzugsweise von Arbeitspunkten mit gleichem Drehmoment gebildet. In Figur 1 ist ein Kreis K eingezeichnet, wobei der Kreis K das Stromlimit eines Inverters der Werkzeugmaschine 10 darstellt. Der Kreis K bzw. das Stromlimit des Inverters liegt zu gleichen Teilen in den vier Quadranten 1, 2, 3, 4 der Raumzeigerdarstellung, was gleichbedeutend damit ist, dass ein Mittelpunkt des Kreises K mit dem Schnittpunkt der y- und der x-Achse der Raumzeigerdarstellung zusammen fällt. Der Arbeitsbereich AB des Statorstromraumzeigers $I\_S$ ist im dritten Quadranten 3 der Raumzeigerdarstellung eingezeichnet. In der in Figur 1 dargestellten Raumzeigerdarstellung fällt der Arbeitsbereich AB des Statorstromraumzeigers $I\_S$ mit der MTPA-Kennlinie der Werkzeugmaschine 10 zusammen. Der Motor 12 der Werkzeugmaschine 10 wird dadurch vorteilhafterweise an einem wirkungsgradoptimierten Arbeitspunkt betrieben, in dem die Stromwärmeverluste minimal sind.

Durch den ersten Quadranten 1 und den vierten Quadranten 4 verläuft die 0 Nm-Kennlinie N, die im Wesentlichen parallel zu der y-Achse der Raumzeigerdarstellung verläuft. Darüber hinaus ergibt sich eine zweite 0 Nm-Kennlinie N2, welche auf der x-Achse verläuft bzw. mit der x-Achse zusammenfällt (daher nicht dargestellt). Die in Figur 1 abgebildete Raumzeigerdarstellung zeigt eine Werkzeugmaschine 10 bzw. deren Betrieb, bei der die Bremsleistung der Werkzeugmaschine 10 dadurch reduziert wird, dass mindestens ein Korrekturfaktor k ermittelt und auf einen maximalen Motorstrom $I\_S$, max der Werkzeugmaschine 10 angewendet wird, so dass ein reduzierter Sollwert $I\_S$, red für den Motorstrom erhalten wird. Dies entspricht einem effizienten generatorischen Bremsbetrieb der Werkzeugmaschine 10.

In den Figuren 2a und 2b wird eine Raumzeigerdarstellung eines maximal verlustbehafteten generatorischen Bremsbetriebs einer Werkzeugmaschine 10 dargestellt. Abweichend zu Figur 1, wird bei den in Figur 2 dargestellten Bremsverfahren ein Stromraumzeigers $I\_S$, max in der Raumzeigerdarstellung durch Anwendung eines geänderten Bremswinkels β_brems gedreht, so dass eine Länge des Stromraumzeigers $I\_S$, max im Wesentlichen unverändert bleibt und die Bremsleistung der Werkzeugmaschine 10 reduziert wird. Der Stromraumzeigers $I\_S$, max befindet sich anfänglich im dritten Quadranten 3 der Raumzeigerdarstellung, gelangt aber durch die Drehung in Figur 2a auf die Grenze zwischen dem zweiten Quadranten 2 und dem dritten Quadranten 3. Der Stromraumzeigers $I\_S$, max befindet sich anfänglich im dritten Quadranten 3 der Raumzeigerdarstellung, gelangt aber durch die Drehung in Figur 2b in den vierten Quadranten 4. Der Bremswinkel β_brems ist ebenfalls im vierten Quadranten 4 der Raumzeigerdarstellung eingezeichnet. Der gedrehte Stromraumzeiger $I\_S$, max schneidet im vierten Quadranten 4 den Kreisbereich K, der das Stromlimit des Inverters der Elektronik der Werkzeugmaschine 10, wobei dieser Schnittpunk des gedrehten Stromraumzeigers $I\_S$, max und des Kreisbereichs K in dem in Figur 2 abgebildeten Ausführungsbeispiel der Erfindung mit dem Schnittpunkt des Kreisbereichs K und der 0 Nm-Kennlinie N zusammen fällt. Der Arbeitsbereich AB ist daher auf Arbeitspunkte zwischen den Zuständen "maximales Bremsmoment" und "kein Bremsmoment, d.h. 0 Nm" begrenzt.

Es sei angemerkt, dass die in den Figuren 3 bis 6 dargestellten Blockschaltbilder beispielhaft Bremsverfahren für eine Werkzeugmaschine 10 zeigen, bei denen der Motor 12 mit einer feldorientierten Regelung betrieben wird. Das vorgeschlagene Verfahren kann selbstverständlich auch mit einer Werkzeugmaschine 10 durchgeführt werden, bei der der Motor 12 mit einer Blockkommutierung geregelt wird. Der Motor 12 der Werkzeugmaschine 10 ist ein bürstenloser Motor, der vorzugsweise eine Leistung von mehr als 1.800 Watt (W) abgeben kann.

Fig. 3 zeigt ein mögliches Blockschaltbild «Rekuperation» mit effizientem generatorischem Bremsbetrieb einer Werkzeugmaschine 10 ohne Bremschopper 18. Bei den in Figur 3 abgebildeten Bremsverfahren ist der Akkuspannungsregler 20 dazu eingerichtet, einen Korrekturfaktor k_U, red für die Spannung der Energieversorgungsvorrichtung 14 auszugeben, während der Akkustromregler 22 dazu eingerichtet, einen Korrekturfaktor k_I, red für den Strom der Energieversorgungsvorrichtung 14 auszugeben. Darüber hinaus ist ein Drehzahlregler 30 vorgesehen, der die Drehzahl n der Werkzeugmaschine 10 regelt. Als Ausgangs- bzw. Stellgrößen des Bremsverfahrens werden Sollstromwerte erhalten, die an die Motorstromregler 34, 36 weitergeben werden können. Bei den Sollstromwerten kann es sich vorzugsweise um Sollstromwerte für die d- und die q-Achse der Raumzeigerdarstellung handeln. Die Motorstromregler 34, 36 stellen insbesondere einen d-Strom-Regler 34 und einen q-Strom-Regler 36 dar, wobei die Motorstromregler 34, 36 ihre Steuerbefehle an die Pulsweitenmodulation PWM weitergeben.

Fig. 4 zeigt ein mögliches Blockschaltbild «Rekuperation» mit effizientem generatorischem Bremsbetrieb einer Werkzeugmaschine 10 mit Bremschopper 18. In dem in Figur 4 dargestellten Blockschaltbild sind der Akkustrom-Regler 22, der Drehzahlregler 30 und die Motorstromregler 34, 36 abgebildet, die bereits aus Figur 3 und dem dort gezeigten Blockschaltbild bekannt sind. Darüber hinaus ist in Figur 4 ein Tastverhältnis-Regler 28 dargestellt, der im Sinne der Erfindung bevorzugt auch als «dritter Regler» bezeichnet werden kann und zur Begrenzung des Tastverhältnis auf einen Sollwert D_soll von beispielsweise 95 % verwendet wird. Der Ausgangswert dieses dritten Reglers ist ein Korrekturfaktor k_red, der zwischen den Werten 0 und 1 liegt. Dieser Korrekturfaktor k_red kann mit dem Strom I_S, max multipliziert werden, um den reduzierten Motorstatorsollstrom I_S, red zu erhalten.

Darüber hinaus zeigt das in Figur 4 dargestellte Blockschaltbild einen Zweipunktregler 24 mit Hysterese, der im Sinne der Erfindung bevorzugt als «erster Regler» bezeichnet wird. Dieser erste Regler 24 wird vorzugsweise zur Ansteuerung des als «Bremschopper» bezeichneten Bremswiderstands 18 verwendet. Der erste Regler 24 kann beispielsweise als Komparator mit Schalthysterese ausgebildet sein und dazu eingerichtet sein, eine Zwischenkreisspannng mit einer Referenzspannung zu vergleichen. Die Zwischenkreisspannng kann vorzugsweise auch als Akkuspannung u_Akku bezeichnet werden, während die Referenzspannung in Figur 4 mit der Bezeichnung «U_Chopper» bezeichnet wird. Der erste Regler 24 gibt als Ausgangssignal ein PWM-Signal aus, das ein High-Pegel ausgibt, wenn die Akkuspannung größer ist als die Referenzspannung, d.h. u_Akku > u_Chopper. Ein Tastverhältnis des PWM-Signals kann beispielsweise durch den in Figur 4 dargestellten Tiefpassfilter 32 gebildet werden. Es ist im Sinne der Erfindung bevorzugt, dass zeitliche veränderliche Werte oder Größen mit Kleinbuchstaben bezeichnet werden, während konstante Werte oder Größen, wie Grenzwerte oder andere vorgegebene Werte, mit Großbuchstaben bezeichnet werden.

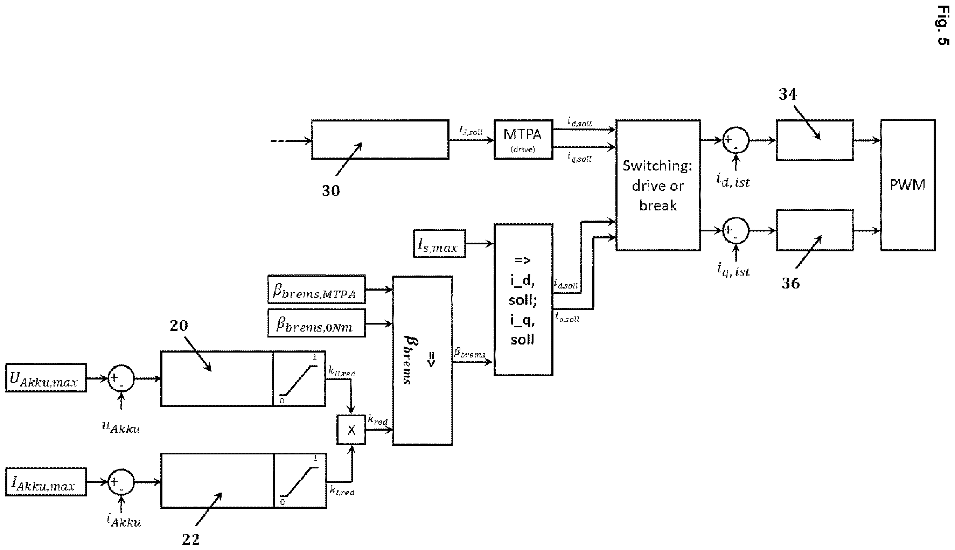

Fig. 5 zeigt ein mögliches Blockschaltbild «Rekuperation» mit maximal verlustbehaftetem generatorischem Bremsbetrieb einer Werkzeugmaschine 10 ohne Bremschopper 18. Ähnlich zu dem Blockschaltbild der Figur 3 werden bei dem in Figur 5 beschriebenen Bremsverfahren Korrekturfaktoren k_U, red und k_I, red ausgegeben, die zu einem gemeinsamen Korrekturfaktor k_red zusammengefasst werden können. Der in Figur 5 verwendete Korrekturfaktor k_red ergibt sich vorzugsweise aus einer Kombination der Korrekturfaktoren k_U, red und k_I, red für die Spannung und den elektrischen Strom. Der Korrekturfaktor k_red hat in der in Figur 5 dargestellten Ausgestaltung der Erfindung, in der vorzugsweise kein Bremschopper 18 verwendet wird, keinen Anteil, der auf ein Tastverhältnis des Bremschoppers 18 zurückgeht.

Insbesondere kann der Korrekturfaktor k_U, red vom Akkuspannungs-Regler 20 und der Korrekturfaktor k_I, red vom Akkustrom-Regler 22 ermittelt werden. Aus den Korrekturfaktoren k_U, red und k_I, red kann der kombinierte Korrekturfaktor k_red berechnet werden, der verwendet werden kann, um den Statorstromraumzeigerwinkel oder Bremswinkel $\beta$_brems zu berechnen. Dazu werden die Winkel $\beta$_brems, MTPA und $\beta$_brems, 0 Nm voneinander abgezogen und mit dem kombinierten Korrekturfaktor k_red multipliziert. Zu dem Produkt kann der $\beta$_brems, 0 Nm erneut hinzuaddiert werden, so dass der Bremswinkel $\beta$_brems erhalten wird. Der Parameter $\beta$_brems, MTPA steht vorzugsweise für den Winkel auf der MTPA-Kennlinie, während der Parameter $\beta$_brems, 0 Nm dem Statorstromraumzeigerwinkel im vierten Quadranten 4 der Raumzeigerdarstellung oder dem Statorstromraumzeigerwinkel auf der x-Achse zwischen zweiten Quadranten 2 und dritten Quadranten 3 entspricht, an dem kein Drehmoment erzeugt wird. Dieser Parameter $\beta$_brems, 0 Nm im vierten Quadranten 4 ergibt sich vorzugsweise aus dem Schnittpunkt des Stromlimit-Kreises K mit der 0 Nm-Kennlinie N. Mit Hilfe des Bremswinkels $\beta$_brems und des Stroms I_S, max können die d- und q-Sollwerte berechnet werden, die an den d-Strom-Regler 34 und den q-Strom-Regler 36 weitergeleitet werden können.

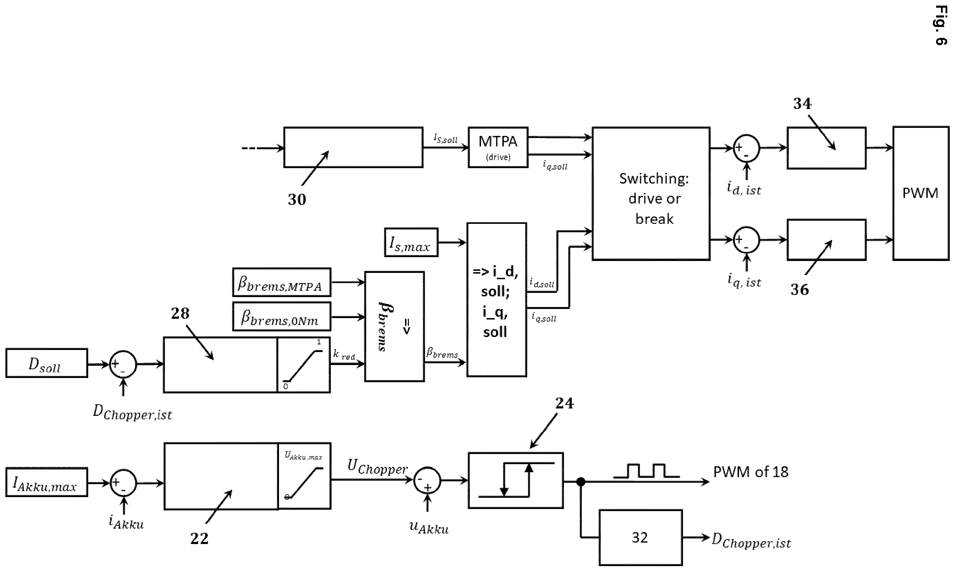

Fig. 6 zeigt ein mögliches Blockschaltbild «Rekuperation» mit maximal verlustbehaftetem generatorischem Bremsbetrieb einer Werkzeugmaschine 10 mit Bremschopper 18, wobei sich das in Figur 6 dargestellte Blockschaltbild in weiten Teilen eine Kombination von Elementen der Blockschaltbilder aus den Figuren 4 und 5 darstellt.

Fig. 7 zeigt eine schematische Auftragung der Drehzahl n des Motors 12 der Werkzeugmaschine 10 gegen die Zeit t zur Verdeutlichung der Bremszeit t_down und der Beschleunigungszeit t_up. Dargestellt ist ein möglicher Verlauf der Drehzahl n mit einer Unterbrechung zwischen den Zeiten t1 und t2. In der Zeitspanne zwischen den Zeiten t0 und t1 steigt die Drehzahl n der Werkzeugmaschine 10 an, um bei der Zeit t1 einen maximalen Wert n_max zu erreichen. Diese Zeitspanne zwischen den Grenzen t1 und t2 wird im Sinne der Erfindung als Beschleunigungszeit t_up bezeichnet. Von dem maximalen Drehzahlwert n_max kann die Werkzeugmaschine 10 durch einen Abbremsvorgang zum Stillstand gebracht werden. Bei konventionell arbeitenden Werkzeugmaschinen kann ein solcher Bremsvorgang gemäß der gestrichelten Linie in Figur 7 erfolgen und beispielsweise länger dauern als die Beschleunigungszeit t_up. Ein Verhältnis aus Bremszeit und Beschleunigungszeit kann in diesem Fall größer als 1 sein, weil die Bremszeit t_down größer ist als die Beschleunigungszeit t_up. Bei der in Figur 7 dargestellten Auftragung der Drehzahl n gegen die Zeit t wird die Bremszeit t_down von den Zeiten t2 und t3 begrenzt.

Gemäß einer bevorzugten Ausgestaltung der Erfindung verläuft das Bremsen der Werkzeugmaschine 10 gemäß der beiden durchgezogenen Linien in Figur 7. Das Abbremsen erfolgt gemäß einem normalen Abbremsvorgang gemäß der rechten durchgezogenen Linie, wobei eine Bremszeit t_down in einem Bereich zwischen 2 und 4 Sekunden liegt. In einem solchen Fall kann das Verhältnis aus Bremszeit und Beschleunigungszeit kleiner als 1 sein, d.h. die Bremszeit t_down ist kleiner als die Beschleunigungszeit t_up. Nach Erkennung eines Kickback-Falls kann die Werkzeugmaschine 10 bzw. ihr Werkzeug 16 in weniger als 1,5 Sekunden abgebremst werden. Ein solcher Schnell- oder Kickback-Bremsvorgang wird durch die linke durchgezogene Linie in Figur 7 dargestellt. In einem solchen Fall kann das Verhältnis aus Bremszeit und Beschleunigungszeit kleiner als 0,7, bevorzugt kleiner als 0,5 sein, d.h. die Bremszeit t_down ist deutlich kleiner als die Beschleunigungszeit t_up. Beispielsweise kann die Bremszeit t_down kleiner als 70 %, bevorzugt kleiner als 50 % der Beschleunigungszeit t_up sein.

Figur 8 zeigt ebenfalls eine schematische Auftragung der Drehzahl n des Motors 12 der Werkzeugmaschine 10 gegen die Zeit t zur Verdeutlichung der Bremszeit t_down und der Beschleunigungszeit t_up. Die Erfinder haben erkannt, dass mit verringerter Drehzahl die rotierende Trennscheibe 16 nur noch sehr wenig Rotationsenergie hat und daher eine geringe Gefährdung für den Anwender der Werkzeugmaschine 10 darstellt. Es kann daher im Kontext der Erfindung ausreichend sein, dass das Werkzeug 16 der Werkzeugmaschine 10 nicht vollständig zum Stillstand gebracht wird, sondern dass der Bremsvorgang bereits vorher endet, beispielsweise dann, wenn das Werkzeug 16 der Werkzeugmaschine 10 mit einer Drehzahl n von weniger als 70 %, bevorzugt weniger als 63 %, 55 %, 45 %, 32 % oder 22 % der ursprünglichen Drehzahl n_max des Werkzeugs 16 rotiert. Selbstverständlich kann das Werkzeug 16 der Werkzeugmaschine 10 auch mit einem noch geringeren Anteil der ursprünglichen Drehzahl n_max rotieren, bis es beispielsweise bis zum Stillstand abgebremst wird. Das Ende der Bremszeit t_down wird dann entsprechend durch Endzeiten t3_70 %, t3_63 %, t3_55 %, t3_45 %, t3_32 %, oder t3_22 % festgelegt. Selbstverständlich sind auch alle Zwischenwerte zwischen 70 und 0 % möglich, wie zum Beispiel 67 %, 57,5 %, 43,33 %, 2,56 % usw. Es ist in dieser Ausgestaltung der Erfindung bevorzugt, dass dem Werkzeug 16 der Werkzeugmaschine 10 der größere Teil seiner Rotationsenergie entzogen und in die Energieversorgungsvorrichtung 14 der Werkzeugmaschine 10 zurückgespeist wird. Durch die Wegnahme des Großteils der Rotationsenergie kann das Werkzeug 16 der Werkzeugmaschine 10 bereits so stark abgebremst werden, dass die rotierende Trennscheibe 16 keine Gefahr mehr für den Nutzer der Werkzeugmaschine 10 darstellt. Wenn die Bremszeit t_down nicht erst bei Stillstand des Werkzeugs 16 der Werkzeugmaschine 10 endet, sondern bereits dann, wenn sich das Werkzeug 16 der Werkzeugmaschine 10 nur noch mit weniger als 70 %, bevorzugt weniger als 63 %, 55 %, 45 %, 32 %, 22 % der ursprünglichen Drehzahl n_max des Werkzeugs 16 dreht, dann kommt es vorteilhafterweise auf die Zeitspanne bis zum tatsächlichen Stillstand des Werkzeugs der Werkzeugmaschine nicht mehr an, denn die Bremszeit t_down bzw. deren Endpunkt t3 wird durch das Erreichen der geringeren Drehzahl festgelegt.

Es kann im Sinne der Erfindung auch bevorzugt sein, dass die Werkzeugmaschine 10 oder ihr Werkzeug 16 mit einem reduzierten Gradienten mit einer anderen Steigung zum Stillstand gebracht wird.

In der in Figur 8 dargestellten Auftragung der Drehzahl n gegen die Zeit t sind insbesondere konstante Geraden für die Werte von 90 % der maximalen Drehzahl n_max und 10 % der maximalen Drehzahl n_max eingezeichnet. Der Wert von 90 % der maximalen Drehzahl n_max bildet zusammen mit dem zugehörigen Zeitwert t1_90% ein Wertepaar, dass auf den Graphen n(t) liegt. In analogerweise bildet der Wert von 10 % der maximalen Drehzahl n_max bildet zusammen mit dem zugehörigen Zeitwert t3_10% ein Wertepaar, dass auf den Graphen n(t) liegt.

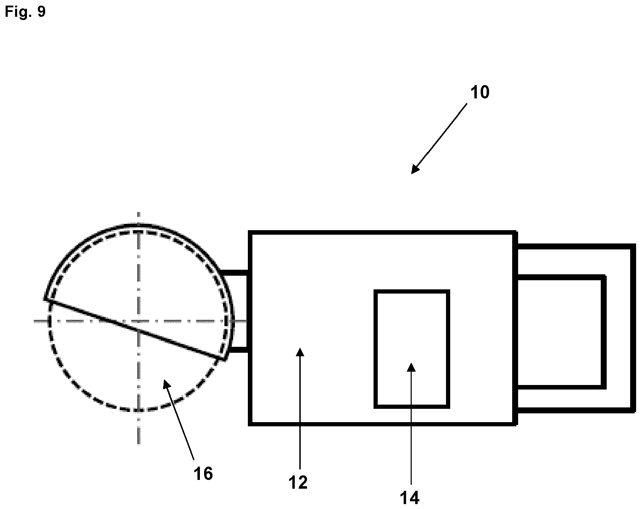

Figur 9 zeigt eine schematische Darstellung einer bevorzugten Ausgestaltung der vorgeschlagenen Werkzeugmaschine 10. Die Werkzeugmaschine 10 weist einen Motor 12 auf, der vorzugsweise als bürstenloser Motor ausgebildet ist. Die Werkzeugmaschine 10 kann ein Werkzeug 16 aufweisen, das beispielsweise als scheibenförmiges Schneidwerkzeug ausgebildet sein kann. Bei der in Figur 9 abgebildeten Werkzeugmaschine 10 handelt es sich vorzugsweise um einen Trennschleifer, mit dem Schnitte in einen Untergrund, wie Beton, eingebracht werden können. Das Werkzeug 16 der Werkzeugmaschine 10 kann von einem Blattschutz (ohne Bezugszeichen) umgeben sein, um den Nutzer der Werkzeugmaschine 10 vor Späne- und Funkenflug zu schützen. Die Werkzeugmaschine 10 kann mit mindestens einer Energieversorgungsvorrichtung 14 verbunden werden, um die Werkzeugmaschine 10 mit elektrischer Energie zu versorgen. Selbstverständlich kann die Werkzeugmaschine 10 auch zwei oder mehr Energieversorgungsvorrichtungen 14 aufweisen. Im Kontext der vorliegenden Erfindung kann elektrische Energie in die mindestens eine Energieversorgungsvorrichtung 14 zurückgespeist werden, dies insbesondere dann, wenn die Werkzeugmaschine 10 abgebremst wird. Die Werkzeugmaschine 10 kann darüber hinaus einen oder mehrere Handgriffe (ohne Bezugszeichen) aufweisen, mit denen der Nutzer der Werkzeugmaschine 10 die Werkzeugmaschine 10 transportieren oder bei der Arbeit führen kann.

**Bezugszeichenliste**

| | |
|---|---|
| 1 | 1. Quadrant der Raumzeigerdarstellung |
| 2 | 2. Quadrant der Raumzeigerdarstellung |
| 3 | 3. Quadrant der Raumzeigerdarstellung |
| 4 | 4. Quadrant der Raumzeigerdarstellung |
| 10 | Werkzeugmaschine |
| 12 | Motor |
| 14 | Energieversorgungsvorrichtung |
| 16 | Werkzeug |
| 18 | Bremschopper |

| 20 | Spannungsregler der Energieversorgungsvorrichtung |
|---|---|
| 22 | Stromregler der Energieversorgungsvorrichtung |
| 24 | erster Regler |
| 26 | zweiter Regler |
| 28 | dritter Regler, insbesondere Tastverhältnis-Regler |
| 30 | Drehzahlregler |
| 32 | Tiefpassfilter |
| 34 | d-Strom-Regler |
| 36 | q-Strom-Regler |
| M | Motorbetrieb |
| G | Generatorbetrieb |
| I_d | Drehmoment |
| I_q | Drehmoment |
| ↑M | positiv ansteigendes Drehmoment |
| ↓M | negativ ansteigendes Drehmoment |
| K | Kreisbereich als Stromlimit des Inverters |
| AB | Arbeitsbereich des Statorstromraumzeigers |
| N | 0 Nm-Kennlinie |
| MTPA | MTPA-Kennlinie (Maximum Torque per Ampere bzw. maximales Drehmoment pro Ampere |
| β_brems | Bremswinkel |
| PWM | Pulsweitenmodulation |
| n | Drehzahl |
| t | Zeit |

## Patentansprüche

1. Verfahren zum Bremsen einer Werkzeugmaschine (10), wobei die Werkzeugmaschine (10) eine akkubetriebene Werkzeugmaschine ist und elektrische Energie, die beim Bremsen der Werkzeugmaschine (10) frei wird, in eine Energieversorgungsvorrichtung (14) der Werkzeugmaschine (10) zurückgespeist wird,
**gekennzeichnet durch die folgenden Verfahrensschritte:**

a) Betrieb der Werkzeugmaschine (10) unter Vorgabe eines ersten Stromwerts,
b) Rückspeisung der elektrischen Energie, die beim Bremsen der Werkzeugmaschine (10) frei wird, in die Energieversorgungsvorrichtung (14) der Werkzeugmaschine (10),
c) Reduzierung einer Bremsleistung der Werkzeugmaschine (10), wenn mindestens ein Grenzwert der Energieversorgungsvorrichtung (14) überschritten wird,
d) Weiterbetrieb der Werkzeugmaschine (10) mit Sollstromwerten, wobei die Sollstromwerte basierend auf der Reduzierung der Bremsleistung der Werkzeugmaschine (10) und des ersten Stromwerts berechnet werden.

2. Verfahren nach Anspruch 1,
**dadurch gekennzeichnet, dass**
die Werkzeugmaschine (10) entlang einer verlustleistungsoptimierten Kennlinie betrieben wird.

3. Verfahren nach Anspruch 1 oder 2,
**dadurch gekennzeichnet, dass**
die Werkzeugmaschine (10) entlang einer MTPA-Kennlinie in einer Raumzeigerdarstellung betrieben wird.

4. Verfahren nach Anspruch 3,
**dadurch gekennzeichnet, dass**
die Sollstromwerte Sollstromwerten für die d- und die q-Achse der Raumzeigerdarstellung sind.

5. Verfahren nach einem der vorhergehenden Ansprüche,
**dadurch gekennzeichnet, dass**
die Bremsleistung der Werkzeugmaschine (10) durch den folgenden Verfahrensschritt reduziert wird:
e) Drehung eines Stromraumzeigers I_S, max in der Raumzeigerdarstellung durch Anwendung eines geänderten Bremswinkels β_brems, so dass eine Länge des Stromraumzeigers I_S, max im Wesentlichen unverändert bleibt.

6. Verfahren nach einem der Ansprüche 1 bis 4,

**dadurch gekennzeichnet, dass**
die Bremsleistung der Werkzeugmaschine (10) durch die folgenden Verfahrensschritte reduziert wird:

f) Ermittlung von mindestens einem Korrekturfaktors k und

g) Anwendung des mindestens einen Korrekturfaktors k auf einen maximalen Motorstrom I_S, max, wodurch ein reduzierter Sollwert I_S, red für den Motorstrom erhalten wird.

7. Verfahren nach Anspruch 6
**dadurch gekennzeichnet, dass**
der mindestens eine Korrekturfaktor k in einem Wertebereich zwischen 0 und 1 liegt.

8. Verfahren nach Anspruch 6 oder 7
**dadurch gekennzeichnet, dass**
sich der mindestens eine Korrekturfaktor k aus einem ersten Korrekturfaktor k_U, red, einem zweiten Korrekturfaktor k_I, red und/oder einem dritten Korrekturfaktor k_red zusammensetzt, wobei der erste Korrekturfaktor k_U, red durch einen Spannungsregler der Energieversorgungsvorrichtung ermittelt wird und der zweite Korrekturfaktor k_I, red durch einen Stromregler der Energieversorgungsvorrichtung ermittelt wird und der dritte Korrekturfaktor k_red zur Begrenzung eines Tastverhältnisses eingesetzt wird.

9. Verfahren nach einem der vorhergehenden Ansprüche
**dadurch gekennzeichnet, dass**
die Werkzeugmaschine (10) einen Bremschopper (18) umfasst, wobei elektrische Energie, die beim Bremsen des Werkzeugs (16) der Werkzeugmaschine (10) frei wird, von dem Bremschopper (18) aufgenommen wird.

10. Verfahren nach einem der vorhergehenden Ansprüche
**dadurch gekennzeichnet, dass**
eine Regelung eines Motors (12) der Werkzeugmaschine (10) eine feldorientierte Regelung oder eine Blockkommutierung umfasst.

11. Verfahren nach einem der vorhergehenden Ansprüche
**dadurch gekennzeichnet, dass**
das Werkzeug (16) der Werkzeugmaschine (10) mit einer Bremszeit von in einem Bereich von 2 bis 4 Sekunden gestoppt wird.

12. Verfahren nach einem der vorhergehenden Ansprüche
**dadurch gekennzeichnet, dass**
das Werkzeug (16) der Werkzeugmaschine (10) mit einer Bremszeit von kleiner als 1,5 Sekunden, bevorzugt kleiner als 1 Sekunde, am meisten bevorzugt kleiner als 0,5 Sekunden gestoppt wird, wenn das Bremsen nach Erkennen eines Kickback-Ereignisses erfolgt.

13. Verfahren nach einem der vorhergehenden Ansprüche
**dadurch gekennzeichnet, dass**
ein Verhältnis von Bremszeit t_down zu Beschleunigungszeit t_up kleiner als 1 ist.

14. Werkzeugmaschine (10) zur Durchführung des Verfahrens nach einem der vorhergehenden Ansprüche
**dadurch gekennzeichnet, dass**
ein Motor (12) der Werkzeugmaschine (10) ein bürstenloser Motor ist.

15. Werkzeugmaschine (10) nach Anspruch 14
**dadurch gekennzeichnet, dass**
die Werkzeugmaschine (10) einen Bremschopper (18) umfasst, wobei der Bremschopper (18) dazu eingerichtet ist, elektrische Energie, die beim Bremsen des Werkzeugs (16) der Werkzeugmaschine (10) frei wird, aufzunehmen.

Fig. 1

Fig. 2a

Fig. 2b

**Fig. 3**

**Fig. 4**

**Fig. 5**

Fig. 6

**Fig. 7**

Fig. 8

Fig. 9

Europäisches
Patentamt

European
Patent Office

Office européen
des brevets

# EUROPÄISCHER RECHERCHENBERICHT

**Nummer der Anmeldung**

EP 23 20 2006

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 202594 A1 (ZAHNRADFABRIK FRIEDRICHSHAFEN [DE]) 18. August 2016 (2016-08-18) | 1,10,14 | INV. H02P21/36 B25F5/00 |
| Y | * Absätze [0002], [0052], [0075], [0077] * | 2-4,6-9, 11-13,15 | |
| | ----- | | |
| Y | WO 2023/064247 A1 (MILWAUKEE ELECTRIC TOOL CORP [US]) 20. April 2023 (2023-04-20) * Abbildungen 1,11 * | 2-4 | |
| | ----- | | |
| Y | US 2017/234484 A1 (VANKO JOHN C [US] ET AL) 17. August 2017 (2017-08-17) * Abbildung 14 * | 6-8, 11-13 | |
| | ----- | | |
| A | EP 4 229 730 A1 (HUSQVARNA AB [SE]) 23. August 2023 (2023-08-23) * Abbildung 1 * | 1-15 | |
| | ----- | | |
| A | EP 4 087 115 A1 (STIHL AG & CO KG ANDREAS [DE]) 9. November 2022 (2022-11-09) * Abbildung 5 * | 1-15 | RECHERCHIERTE SACHGEBIETE (IPC) |
| | ----- | | |
| A | DE 10 2010 021865 A1 (SEW EURODRIVE GMBH & CO [DE]) 1. Dezember 2011 (2011-12-01) * Abbildung 3 * | 1-15 | H02P B25H B25F |
| | ----- | | |
| Y | US 2021/194393 A1 (ROSE DAVID [US] ET AL) 24. Juni 2021 (2021-06-24) * Abbildung 7 * | 9,15 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 27. Februar 2024 | Schneider, Gernot |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

Seite 1 von 2

**EUROPÄISCHER RECHERCHENBERICHT**

**Nummer der Anmeldung**

**EP 23 20 2006**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CHOO KYOUNG-MIN ET AL: "Design and Analysis of Electrical Braking Torque Limit Trajectory for Regenerative Braking in Electric Vehicles With PMSM Drive Systems", IEEE TRANSACTIONS ON POWER ELECTRONICS, INSTITUTE OF ELECTRICAL AND ELECTRONICS ENGINEERS, USA, Bd. 35, Nr. 12, 14. Mai 2020 (2020-05-14), Seiten 13308-13321, XP011802963, ISSN: 0885-8993, DOI: 10.1109/TPEL.2020.2994615 [gefunden am 2020-08-04] * das ganze Dokument * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| **München** | **27. Februar 2024** | **Schneider, Gernot** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 20 2006

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-02-2024

| Im Recherchenbericht angeführtes Patentdokument | Datum der Veröffentlichung | Mitglied(er) der Patentfamilie | Datum der Veröffentlichung |
|---|---|---|---|
| DE 102015202594 A1 | 18-08-2016 | KEINE | |
| WO 2023064247 A1 | 20-04-2023 | KEINE | |
| US 2017234484 A1 | 17-08-2017 | EP 3292959 A1 | 14-03-2018 |
| | | US 2017234484 A1 | 17-08-2017 |
| EP 4229730 A1 | 23-08-2023 | AU 2021363969 A1 | 15-06-2023 |
| | | CN 116390833 A | 04-07-2023 |
| | | EP 4229730 A1 | 23-08-2023 |
| | | US 2023390963 A1 | 07-12-2023 |
| | | US 2023396056 A1 | 07-12-2023 |
| | | US 2023405875 A1 | 21-12-2023 |
| | | WO 2022086382 A1 | 28-04-2022 |
| | | WO 2022086383 A1 | 28-04-2022 |
| EP 4087115 A1 | 09-11-2022 | KEINE | |
| DE 102010021865 A1 | 01-12-2011 | KEINE | |
| US 2021194393 A1 | 24-06-2021 | CN 218788734 U | 04-04-2023 |
| | | EP 4078799 A1 | 26-10-2022 |
| | | JP 2023507276 A | 22-02-2023 |
| | | US 2021194393 A1 | 24-06-2021 |
| | | WO 2021127342 A1 | 24-06-2021 |

EPO FORM P0461

Für nähere Einzelheiten zu diesem Anhang : siehe Amtsblatt des Europäischen Patentamts, Nr.12/82